# EUROPEAN PATENT SPECIFICATION

(11) **EP 4 639 471 B1**
(45) Date of publication and mention of the grant of the patent: **30.09.2026**
(21) Application number: 24710890.5
(22) Date of filing: 08.03.2024
(51) Int. Cl.: G06T 7/00, G06T 7/11, G06T 7/136, G06T 7/194

(54) **METHOD AND DEVICE OF INSPECTING A FLUORESCENT IMAGE OF A MAMMAL TISSUE AND MEDICAL TREATMENT DEVICE**
VERFAHREN UND VORRICHTUNG ZUR INSPEKTION EINES FLUORESZENZBILDES EINES SÄUGERGEWEBES UND MEDIZINISCHE BEHANDLUNGSVORRICHTUNG
PROCÉDÉ ET DISPOSITIF D'INSPECTION D'UNE IMAGE FLUORESCENTE D'UN TISSU DE MAMMIFÈRE ET DISPOSITIF DE TRAITEMENT MÉDICAL

(30) Priority: 08.03.2023 NL 2034294
(43) Date of publication of application: 29.10.2025
(73) Proprietor: RIJKSUNIVERSITEIT GRONINGEN, 9712 CP Groningen (NL); Academisch Ziekenhuis Groningen, 9713 GZ Groningen (NL)
(72) Inventor: VAN DER ZAAG, Pieter Jan, 9747 AG Groningen (NL); KEIZERS, Bas, 9713 GZ Groningen (NL); NIJBOER, Thomas Sebastiaan, 9713 GZ Groningen (NL); VAN BOVEN, Leander Marten, 9747 AG Groningen (NL); KUIPER, Jesper Siemen, 9747 AG Groningen (NL)
(74) Representative: Richardt Patentanwälte PartG mbB
(86) International application number: PCT/NL2024/050114
(87) International publication number: WO 2024/186210

(56) References cited:
- US-A1- 2005 094 147
- FAN HAIDI ET AL: "Automatic segmentation of dermoscopy images using saliency combined with Otsu threshold", COMPUTERS IN BIOLOGY AND MEDICINE, NEW YORK, NY, US, vol. 85, 29 March 2017 (2017-03-29), pages 75 - 85, XP085046083, ISSN: 0010-4825, DOI: 10.1016/J.COMPBIOMED.2017.03.025
- ANONYMOUS: "Otsu's method - Wikipedia", 12 January 2017 (2017-01-12), XP055468978, Retrieved from the Internet <URL:https://en.wikipedia.org/w/index.php?title=Otsu's_method&oldid=759649503> [retrieved on 20180420]

## Description

### BACKGROUND

The present application pertains to an image processing method.

The present application pertains to an image processing device.

The present application further pertains to a medical treatment device including an inspection device.

Treatment for most types of solid cancers consists of a radical surgical resection of all tumor tissue. However, differentiation between normal and tumor tissue intraoperatively remains difficult. Therefore, it is not uncommon that a tumor-positive margin is found during pathology assessment two to five days after surgery. According to literature, rates of tumor-positive margins (TPM) range from 10 to 35 percent depending on tumor type. See e.g. Orosco, R. K. et al. Positive surgical margins in the 10 most common solid cancers. Sci. Rep. 8, 56-86 (2018). https://doi.org/10.1038/s41598-018-23403-5. If tumor tissue is present at, or near, the rim of the resected tissue, the risk of local recurrence and distant metastasis is increased which implies a decrease in survival. Consequently, a TPM necessitates additional treatment such as re-operation, radiation therapy and/or systemic therapy. Unfortunately, this is associated with increased morbidity and higher psychological burden to the patient. Therefore, it is crucial to be able to correctly visualize tumor tissue during surgery, however, current optical techniques as well as visual and tactile information obtained by the practitioner are not sufficient to determine tumor margins adequately. Therefore, new techniques in which real-time tumor visualization is obtained are investigated, aiming to reduce the number of TPMs and thereby decrease additional treatments and morbidity.

One of the imaging techniques gaining interest is fluorescence molecular imaging (FMI) because of the possibility for real-time tumor visualization deployed both in the patient (i.e. in-vivo) and immediately after excision (ex-vivo). Therewith the tissue to be inspected is prepared with a fluorescent agent, either by administering the fluorescent agent (FA) to the patient or by impregnating the tissue therewith. The fluorescent agent (FA) may be an untargeted fluorescent dye such as Indocyanine green (ICG) , or a targeted fluorescent dye for imaging tumor tissue and infection and track medicinal therapy. Even though research into FMI in the near-infrared (NIR) spectral range (700-900 nm) has showed promising results, it has been found that there are still complications. For example, scattering of light and absorbance by biological components such as water and blood contribute to attenuation of the excitation light, therewith causing a decrease in sensitivity and contrast of the fluorescence images. These factors may contribute to false-positive TPMs on fluorescence images, even though no TPM is present in the patient. Therewith the obtained fluorescent image (FI) is not always directly suitable as guidance for the surgeon or other medical specialist or for use with a medical treatment device.

W. Heeman et al., A Guideline for Clinicians Performing Clinical Studies with Fluorescence Imaging, J. Nucl. Med., 63 (2022) 640 describes a method wherein a CNR ratio is determined for a tissue sample after it has been inspected by a pathologist. The CNR therein is the contrast to noise ratio computed for the target region as a whole determined by the pathologist.

The paper *'*Automatic segmentation of dermoscopy images using saliency combined with Otsu threshold' by Haidi Fan et al. in Comput.Biol.Med.85(2017)75-85 proposes an automatic segmentation algorithm using saliency combined with Otsu threshold.

The US-patent application US2005/094147 discloses a multi-spectral exogenous fluorescence polarization imaging technique.

### SUMMARY

According to a first object, an improved inspection method is provided for inspecting a fluorescent image of a mammal tissue so as to facilitate a specialist or a surgery device to perform a therapy.

According to a second object, an improved inspection device is provided for inspecting a fluorescent image of a mammal tissue so as to facilitate a specialist or a surgery device to perform a therapy.

According to a third object an improved medical treatment device is provided that includes an improved inspection device.

Typically, a fluorescent image, comprising an array of pixels having respective fluorescent signal values, to be inspected is obtained with preliminary steps as specified below. The fluorescent signal values comprise a first number of fluorescent signal values representing the mammal tissue in the fluorescent image. The improved inspection method comprises subsequent steps of processing the fluorescent image.

In the preliminary steps the mammal tissue, e.g. a human tissue, is irradiated with excitation light, after it is rendered photosensitive with a fluorescent agent, and a fluorescent image is captured from the irradiated and photosensitive tissue. The fluorescent agent serves to visualize different types of tissue such as tumor tissue and tumor free tissue. In one example the fluorescent agent is a targeted fluorescent tracer such as Cetuximab-IRDye800CW or hexvix for imaging tumor tissue and/or infection and track medicinal therapy. In another example, the fluorescent agent is an untargeted fluorescent dye such as Indocyanine green (ICG) for imaging tissue perfusion. The excitation light with which the tissue is to be irradiated, in-vivo or ex-vivo is typically in the infra-red range. A fluorescent agent can be administered to the patient or may be used to impregnate the tissue.

The subsequent steps of the inspection method amongst others comprise performing an image segmentation to distinguish in the fluorescent image a target region to denote a portion in the mammal tissue that is identified as tumorous tissue and a reference region to denote a portion in the mammal tissue that is identified as **healthy** tissue.

Prior to performing this image segmentation a reference value is determined such that a second number of fluorescent signal values comprised in the first number of fluorescent signal values is smaller than or equal to the reference value and the remainder of the first number of fluorescent signal values exceeds the reference value. The second number is a predetermined fraction of the first number. In one example a histogram is obtained of the fluorescent signal values comprised in the first number of fluorescent signal values and the reference value is the value for a predetermined k-th q-quantile of the histogram. The predetermined k-th q-quantile should be chosen in accordance with an expected tumorous tissue area ratio rₑ of a tumorous tissue area to the total tissue area in the fluorescent image (FI). the predetermined k-th quantile may be a k-th percentile with k in a range between 25 and 75. In a simple version the percentile is the median. The ratio k/q should not exceed that tumorous tissue area ratio. Also, the ratio k/q should not be too small. For example, $0.1 ∗ {r}_{e} \leq \frac{k}{q} \leq 0.95 ∗ {r}_{e}$

The improved method is used for example for ex-vivo inspection of mammal tissue which has been resected by a medical specialist to remove tumorous tissue. Typically, the mammal tissue removed by the medical specialist also includes a substantial portion of normal tissue to take into account that the tissue that is readily identified as tumorous is surrounded by tissue that at first sight looks normal but could later develop also into tumorous tissue. Also, it may be practically impossible to exactly follow the border of the tumorous tissue when performing a resection.

Accordingly, in these cases the ratio k/q is often selected as: $0.5 \leq \frac{k}{q} \leq 0.9$

An average fluorescent signal value F_{B} and a standard deviation S is computed of the fluorescent signal values comprised in the second number of fluorescent signal values. Due to the fact that the ratio k/q is selected not too small, i.e. at least 0.1*rₑ, and preferably 0.2 a sufficient amount of data is available to reliably estimate the average fluorescent signal value and the standard deviation of the fluorescent signal for normal tissue. Due to the fact that the ratio k/q is selected not too large, i.e. at most 0.95*rₑ, and preferably 0.9 it is avoided that the estimation of this statistical data is affected by fluorescent signal data of tumorous tissue.

Using the average fluorescent signal value µ_{R} and the standard deviation σ_{R} the image segmentation is then performed to distinguish in the fluorescent image (FI) a target region (TR) and a reference region (RR). The target region (TR) is a region in the fluorescent image (FI) corresponding to a portion in the mammal tissue (MT) that is identified as tumorous tissue in this segmentation. The reference region (RR) is a region in the fluorescent image (FI) corresponding to a remaining portion in the mammal tissue. In this segmentation operation a contrast to noise ratio CNR (p) is determined for each pixel (p). Pixel are classified as part of the target region (TR) if their contrast to noise ratio CNR (p) exceeds a predetermined threshold value and classified as part of the reference region (RR) otherwise. The contrast to noise ratio CNR (p) of a pixel is defined as $CNR \left(p\right) = \frac{FI \left(p\right) - {μ}_{R}}{c ⋅ {σ}_{R}} ,$ Therein FI (p) is the fluorescent signal value of the pixel (p) and c is a predetermined constant.
Hence contrary to the method known from Heeman, the CNR ratio is computed on a pixel wise basis and in the absence of prior knowledge provided by a pathologist.
Best results are obtained in an embodiment wherein the predetermined threshold value is 1 and the predetermined constant is 2.
However, variations are possible depending on further requirements. For example, if it is required that a safety margin is taken into account when determining the target region, a predetermined threshold value less than 1 and/or a predetermined constant less than 2 may be chosen. In that case the estimated target region (TR) will be larger, so that it not only indicates the a portion in the mammal tissue (MT) that is identified as tumorous tissue but also a portion of the mammal tissue surrounding the portion indicated as tumorous tissue that has a risk of becoming tumorous tissue.

The method further comprises identifying a contour of the target region. This can be shown on display, for example superposed on the fluorescent image and serve as an aid to a medical specialist to perform an intervention to a selected portion of the tissue corresponding to the target region in the fluorescent image, for example by treating the selected tissue portion with therapeutic radiation, by supplying a pharmaceutical agent for treatment in the selected tissue portion represented in the target region, by selectively activating a pharmaceutical agent for treatment in the selected tissue portion or by excising the selected tissue portion. Instead of superposing the contour on the fluorescent image it is also possible to superpose the contour on a natural image of the tissue, i.e. an image that appears to have been taken under ambient light conditions. Therewith the medical specialist can monitor the tissue while performing the medical intervention as if he/she were directly seeing the tissue under ambient light conditions instead of monitoring the fluorescent response of the image. In a still further example, the contour is projected onto the tissue.

In some embodiments of the method the fluorescent image is further captured of a background and the method provides for a preliminary image segmentation to distinguish in the fluorescent image a foreground region representing the mammal tissue and a background region representing the background. In one example the background is formed by a carrier surface on which a mammal tissue (for example a complete resected tissue or a slice thereof) is arranged for ex-vivo inspection. That is, the fluorescent image of the mammal tissue is captured ex-vivo with the mammal tissue arranged on the background. In another example the fluorescent image is captured in-vivo while a background is placed in the field of view of the camera as a reference. In the preliminary image segmentation, it is determined per pixel whether or not its fluorescent signal value (FSV) significantly exceeds an average background fluorescent signal value. If it is determined that a fluorescent signal value (FSV) of a pixel significantly exceeds the average background fluorescent signal value, then that pixel is classified as part of the foreground region otherwise it is determined as part of the background region. As an example it is determined that a fluorescent signal value (FSV) of a pixel significantly exceeds the average background fluorescent signal value if a difference between its fluorescent signal value (FSV) and the background fluorescent signal value exceeds a predetermined factor times the standard deviation of the fluorescent signal values of the background. The predetermined factor is, for example, selected in a range of 1-5, for example about 2.

In one example the average fluorescent signal value and the standard deviation are estimated in a calibration step, wherein prior to capturing the fluorescent image a calibration fluorescent image is captured of the background only and the average fluorescent signal value and the standard deviation are determined are determined of the fluorescent signal values in the calibration fluorescent image.
A rough but useful estimation of the average fluorescent signal value can be obtained as follows: ${μ}_{est} = \frac{min + max}{2} ; {σ}_{est} = \frac{max - min}{2 \sqrt{3}}$

Therein min, max respectively are the minimum fluorescent value and the maximum fluorescent value of all fluorescent values in the fluorescent image.

In another example the average fluorescent signal value and the standard deviation of fluorescent signal values are determined (S2A) from a portion (BP) of the fluorescent image (FI) that is designated as representing the background. An operator may for example a rectangular region in the fluorescent image (FI) that is part of the background represented in the fluorescent image (FI). Based on the average fluorescent signal value and the standard deviation of fluorescent signal values in this region a complete preliminary image segmentation can then be performed.

The preliminary image segmentation may be succeeded with a dilation operation wherein the foreground region is extended with one or more pixels to mitigate a risk of edge-effects. That is, performing the preliminary image segmentation further comprises a dilation operation. Also, other corrections may be applied, such as removal of regions identified in the preliminary image segmentation that have an area smaller than a threshold area value. For example, isolated small areas that initially are identified as foreground or that initially are identified as background. Typically, the largest initially identified foreground area is selected for further processing and any smaller initially identified foreground area are considered as part of the background.

In case a preliminary image segmentation is applied then the subsequent image segmentation to determine one or more target regions are applied to the portion of the image determined as foreground region.
Embodiments of the inspection device of the invention may be configured according to the following implementations, individually or in combination.
The inspection device of the invention may be configured such that the predetermined threshold value is 1 and the predetermined constant is 2.
The inspection device of the invention may be configured to obtain a fluorescent image (FI) representing in addition to the mammal tissue (MT) a background, the device being configured to:
perform a preliminary image segmentation to distinguish in the fluorescent image (FI) a foreground region (FR) representing the mammal tissue (MT) and a background region (BR) representing the background, wherein the device is configured to determine per pixel that it is part of the foreground region (FR) if the fluorescent signal value (FSV) significantly exceeds an average fluorescent signal value determined for the background taking into account a standard deviation of fluorescent signal values (FSV) in the background and to determine that the pixel is part of the background region (BR) otherwise;

The inspection device of the invention may be configured to obtain prior to obtaining the fluorescent image a calibration fluorescent image of the background only and to determine the average fluorescent signal value and the standard deviation from said calibration fluorescent image.

The inspection device of the invention may be, configured to determine the average fluorescent signal value and the standard deviation of fluorescent signal values (S2A) from a portion (BP) of the fluorescent image (FI) that is designated as representing the background.

The inspection device of the invention may be configured to obtain a fluorescent image of the mammal tissue captured in-vivo.

The inspection device of the invention may be configured to obtain a fluorescent image captured ex-vivo from a mammal tissue arranged on the background.

The inspection device of the invention may be configured to perform (S5) a dilation operation subsequent to the preliminary image segmentation.
The inspection device of the invention may be, configured so that the predetermined k-th quantile is a k-th percentile with k in a range between 25 and 75.

The inspection device of the invention may be, configured so that the percentile is the median.
The inspection device of the invention may be, further configured to perform a scan trajectory-based evaluation that includes:
obtaining (S10) at least one fluorescent signal value vector of fluorescent signal values in the fluorescent image (FI) along a scan trajectory;
for each threshold value of a plurality of threshold values determining (S11) a respective set of candidate scan trajectory sections in which the fluorescent signal value exceeds the threshold value;
determining) for which threshold value of the plurality of threshold values the respective set of candidate scan trajectory sections best matches the second image segmentation of the fluorescent image (FI) along the scan trajectory.
The inspection device of the invention may be configured to repeat the procedure described therein for a plurality of mutually different scan trajectories of a set of scan trajectories and optionally to repeat the procedure for a plurality of sets of scan trajectories.

The inspection device of the invention may be configured for rejecting (S16) isolated points indicative for a transition (TN) from tumorous tissue or infected tissue to normal tissue.
The inspection device of the invention may be, further configured:
to determine (S20) at least one main axis of at least one contour;
to obtain (S22) at least one fluorescent signal value vector of fluorescent signal values in the fluorescent image (FI) along a scan line that is orthogonal to the main axis;
based on information of the contour at points of intersection with the scan line to selectively perform (S23) an identification of one or more sections of the scan line where a contrast to noise ratio exceeds a predetermined level, said scan line sections each comprising a respective first end point indicative for a transition (NT) from normal tissue to tumorous tissue or infected tissue and a respective second end point indicative for a transition (TN) from tumorous tissue or infected tissue to normal tissue.

The inspection device of the invention may be configured in that the main axis is defined as a line segment that minimizes a distance measure between said line segment and the points of the contour.

The inspection device of the invention may be configured to rotate the fluorescent image (FI) prior to obtaining (S22) the at least one fluorescent signal value vector, wherein the rotation aligns the main axis of the contour with a coordinate axis of the fluorescent image (FI) and wherein the scan line is directed along another coordinate axis of the fluorescent image (FI).

The inspection device of the invention may be, configured so that the information on which said selectively performing (S23) is based comprises an intensity of the fluorescent image (FI) at the points of intersection of the contour. The inspection device of the invention may be configured to combine (S24) and indicate coordinates of points of a plurality of contours in a single image.
The inspection device of the invention may be, configured so that the information on which said selectively performing (S23) is based comprises coordinates of the points of intersection.

The inspection device of the invention may be configured to perform an inverse rotation in accordance with the main axis of the contours prior to performing said combining (S24).

The inspection device of the invention may be, further configured to selectively remove isolated candidate points.

The inspection device of the invention may further comprise a camera to obtain the fluorescent image (FI) of the mammal tissue (MT).

The inspection device of the invention may further comprise a source (7) of excitation light for irradiating the mammal tissue.

The inspection device of the invention may be configured such that the at least one contour comprises a primary contour (C) that indicates a border of the target area with the reference area.

The inspection device of the invention may be configured such that the at least one contour comprises a secondary contour (C') that extends at a distance outside a border of the target area with the reference area.

The inspection device of the invention may be configured so that the secondary contour (C') extends at a distance outside the border in a manner that avoids an intersection of a specified anatomical structure.
The inspection device of the invention may be configured to:
obtain at least one sequence of respective logarithmic fluorescence signal values of respective subsequent pixels that are arranged along a scan trajectory within the fluorescent image, wherein the scan trajectory starts in a position identified as being part of the reference region in the fluorescence image;
compute an indicator for a local linearity of the logarithmic fluorescence signal value as a function of the position in the at least one sequence;
identify a position in the sequence wherein the indicator indicates that the logarithmic fluorescence signal value as a function of the position in the sequence is no longer linear, the identified position being a candidate border position for the border between the normal tissue and the tumor tissue or infected tissue.

The invention may further pertain to a medical treatment device comprising an inspection device of the invention and a treatment equipment to perform a medical treatment to excise or irradiate the tumor in accordance with the constructed contour or to activate a therapeutic substance in the range specified by the constructed contour.

### BRIEF DESCRIPTION OF THE DRAWINGS

These and other aspects of the invention are disclosed in more detail in the attached drawings. Therein
FIG. 1. schematically shows steps of an improved inspection method of inspecting a fluorescent image of a mammal tissue;
FIG. 2 shows an optional step of the improved inspection method;
FIG. 3A and 3B shows a further optional step of the improved inspection method;
FIG. 4A and 4B shows a segmentation step of the improved inspection method;
FIG. 5A, 5B and 5C show application of the method to fluorescent images obtained from sample tissues;
FIG. 6A, 6B and 6C show application of the method to fluorescent images obtained from further sample tissues;
FIG. 7 schematically shows steps of another improved inspection method of inspecting a fluorescent image of a mammal tissue;
FIG. 8 - 10 show application of the embodiment of FIG. 7 to a fluorescent image of sample tissue;
FIG. 11 - 14 show application of the embodiment of FIG. 7 using heuristic information from the method of claim 1;
FIG. 15 schematically shows an inspection device according to an embodiment of the invention;
FIG. 16 schematically shows a medical treatment device according to an embodiment of the invention;
FIG. 17A, 17B respectively show a tray with samples imaged with visible light and a fluorescence image thereof;
FIG. 18A-18F show segmentations of the image in FIG. 17B according to different quantiles;
FIG. 19A, 19B, and 19C demonstrate a further approach for detection of a border position between a normal tissue and an affected tissue.

### DETAILED DESCRIPTION OF EMBODIMENTS

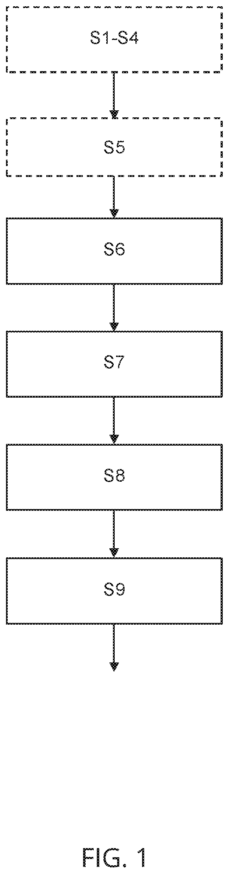

FIG. 1. schematically shows steps S5-S9 of an improved inspection method of inspecting a fluorescent image obtained from a mammal tissue. The fluorescent image is obtained with preparatory steps S1-S4 as follows.

In preparatory step S1 the mammal tissue is rendered photosensitive with a fluorescent agent. The fluorescent agent serves to visualize different types of tissue such as tumor tissue and tumor free tissue. In one example the fluorescent agent is a targeted fluorescent tracer such as Cetuximab-IRDye800CW or hexyl aminolevulinate, also briefly referred to as hexvix for imaging tumor tissue and/or infection and track medicinal therapy. In another example, the fluorescent agent is an untargeted fluorescent dye such as Indocyanine green (ICG) for imaging tissue perfusion. The excitation light with which the tissue is to be irradiated, in-vivo or ex-vivo is typically in the infra-red range. A fluorescent agent can be administered to the patient or may be used to impregnate the tissue.

In preparatory step S3 the mammal tissue being rendered photosensitive with the fluorescent agent is irradiated with excitation light and in preparatory step S4 a fluorescent image is captured of the mammal tissue. The fluorescent image comprises an array of pixels having respective fluorescent signal values. The fluorescent signal values comprise a first number of fluorescent signal values representing the mammal tissue in the fluorescent image. The first number is the number of pixels of the fluorescent image (FI) if only the mammal tissue is captured in the image but can a smaller number if for example also a background is present in the image.

In step S6 of the improved inspection method a reference value is determined such that a second number of fluorescent signal values comprised in the first number of fluorescent signal values, is smaller than or equal to the reference value and the remainder of the first number of fluorescent signal values exceeds the reference value. The second number is a predetermined fraction of the first number.

In step S7 an average fluorescent signal value µ_{R} and a standard deviation σ_{R} is determined is determined of the fluorescent signal values comprised in the second number of fluorescent signal values.

In step S8 an image segmentation is performed to distinguish in the fluorescent image FI a target region TR and a reference region RR to denote a remaining portion in the mammal tissue MT. This step is performed pixelwise. That is, it is determined
per pixel (p) that it is part of the target region TR if a contrast to noise ratio CNR (p) for the pixel exceeds a predetermined threshold value (T_{CNR}) and it is determined that the pixel is part of the reference region RR otherwise. Therein the contrast to noise ratio CNR (p) of a pixel is defined as $CNR \left(p\right) = \frac{FI \left(p\right) - {μ}_{R}}{c ⋅ {σ}_{R}} ,$

Therein FI(p) is the fluorescent signal value of the pixel (p) and c is a predetermined constant. Optimal values are a threshold value of 1 and a value 2 for the constant c.

In step S9 at least one contour B of the target region TR is identified. In one example, the at least one contour comprises a primary contour B that indicates a border of the target area with the reference area. In another example the at least one contour comprises a secondary contour that extends at a distance outside a border of the target area with the reference area to extend the target area with a safety area, to mitigate the risk that tissue near the target area that appears to be normal later develops into tumor tissue. In a specific implementation of the secondary contour B' extends at a distance outside the border in a manner that avoids an intersection of a specified anatomical structure. In an example both the primary contour and the secondary contour are identified.

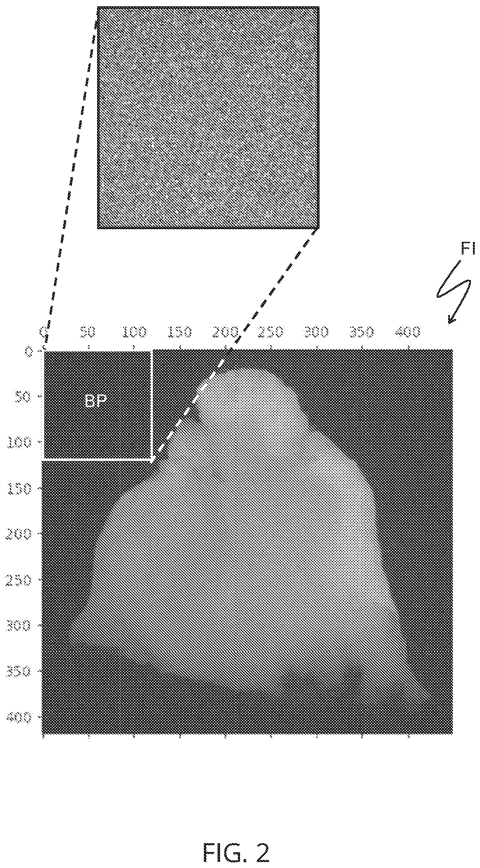

An embodiment of the improved method is described with reference to FIG. 2. In this example the method is applied for ex-vivo inspection of a mammal tissue, wherein the mammal tissue is arranged on a background. In this example an average fluorescent signal value and the standard deviation of fluorescent signal values are determined from a portion BP of the fluorescent image FI that is designated as representing the background. With a user interface, a human operator can easily indicate a rectangular or square portion BP in the image wherein no mammal tissue is represented. Then statistical properties of the image data in this portion are determined and used to perform a preliminary segmentation indicated as step S5 in FIG. 1 wherein a preliminary segmentation is performed to segment the fluorescent image (FI) into a foreground region and a background region based on the statistical properties of the background region as estimated from the designated portion BP. Typically the estimated statistical properties comprise an average fluorescent signal value and a standard deviation of fluorescent signal values of the background. These statistical properties can be efficiently estimated from a minimum and a maximum fluorescent value identified in the designated portion BP as follows. ${μ}_{est} = \frac{min + max}{2} ; {σ}_{est} = \frac{max - min}{2 \sqrt{3}}$

In the preliminary image segmentation S5 it is determined per pixel whether or not its fluorescent signal value (FSV) significantly exceeds an average background fluorescent signal value. If it is determined that a fluorescent signal value (FSV) of a pixel significantly exceeds the average background fluorescent signal value then that pixel is classified as part of the foreground region otherwise it is determined as part of the background region. As an example it is determined that a fluorescent signal value (FSV) of a pixel significantly exceeds the average background fluorescent signal value if a difference between its fluorescent signal value (FSV) and the background fluorescent signal value exceeds a predetermined factor times the standard deviation of the fluorescent signal values of the background. The predetermined factor is, for example, selected in a range of 1-5, for example about 2.
In one example the average fluorescent signal value and the standard deviation are estimated in a calibration step, wherein prior to capturing the fluorescent image a calibration fluorescent image is captured of the background only and the average fluorescent signal value and the standard deviation are determined are determined of the fluorescent signal values in the calibration fluorescent image. A rough but useful estimation of the average fluorescent signal value can be obtained as follows: ${μ}_{est} = \frac{min + max}{2} ; {σ}_{est} = \frac{max - min}{2 \sqrt{3}}$ Therein min, max respectively are the minimum fluorescent value and the maximum fluorescent value of all fluorescent values in the fluorescent image. In the example shown in FIG. 2 the following statistical properties of the background were estimated: ${μ}_{est} \approx 5.18 ; {σ}_{est} \approx 1.59$

Based on this estimation pixels having a fluorescent value of at least 8.36 were identified as foreground FG, i.e. representing the mammal tissue and pixels having a lower fluorescent value as background BG.

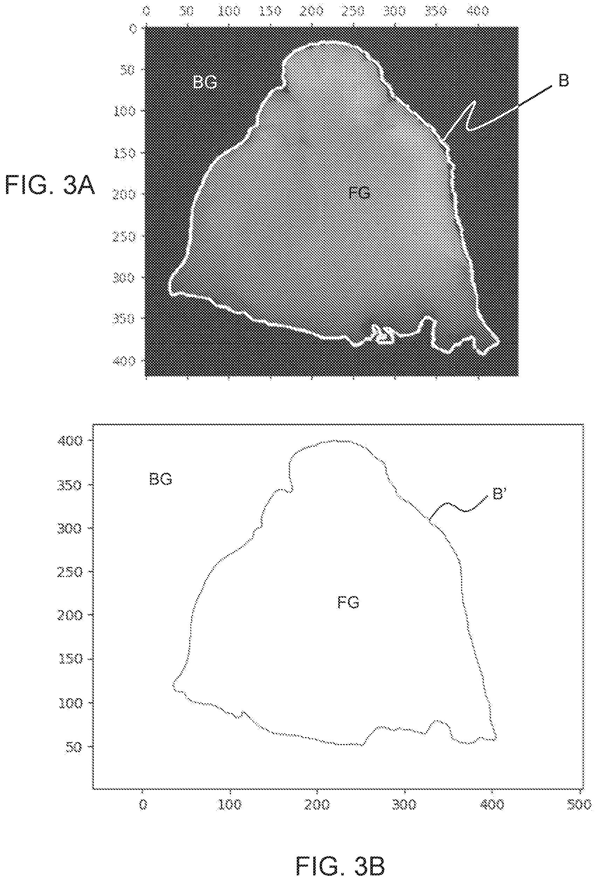

FIG. 3A schematically shows how the fluorescent image (FI) is partitioned into a background area BG and a foreground area FG with a boundary B. FIG. 3B shows a further correction of the boundary to a corrected boundary B'. The further correction is achieved by a dilation of the foreground FG by 1 pixel. The fluorescent signal values in the fluorescent image (FI) comprise a first number N1 of fluorescent signal values in the foreground. These represent the mammal tissue in the fluorescent image.

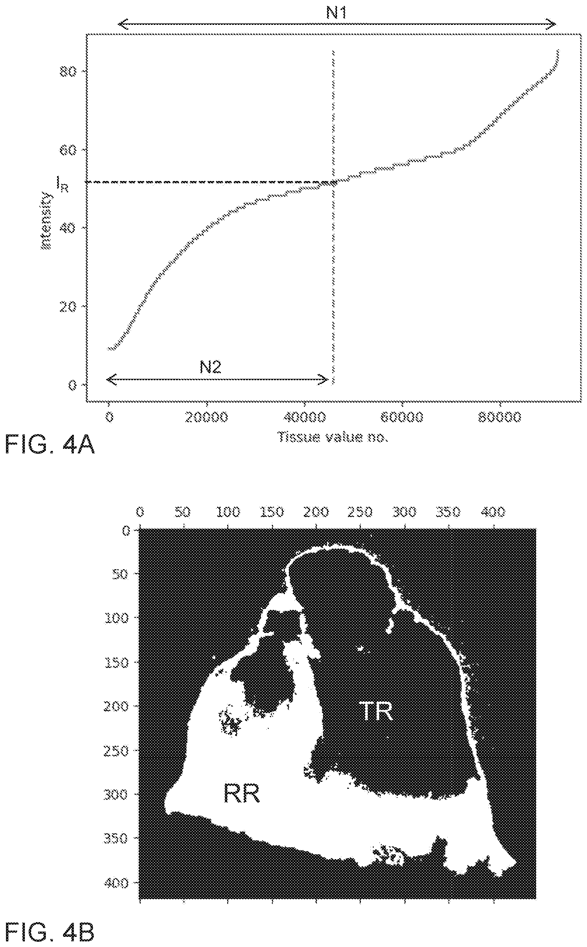

FIG. 4A shows that a reference value I_{R} is determined such that a second number N2 of fluorescent signal values comprised in the first number N1 of fluorescent signal values is smaller than or equal to the reference value I_{R} and the remainder of the first number of fluorescent signal values exceeds the reference value I_{R}. The second number N2 is a predetermined fraction of the first number N1. In this example the predetermined fraction is 0.5. This implies that the reference value IR is the median of the fluorescent signal values comprised in the first number N1 of fluorescent signal values. In a further analysis it is determined that the fluorescent signal values comprised in the second number N2 of fluorescent signal values have the following statistical properties. ${μ}_{R} \approx 37.54 ; {σ}_{R} \approx 12.91$ Therein µ_{RR} and σ_{RR} respectively are the estimated average value and the estimated standard deviation of the fluorescent signal values comprised in the second number N2 of fluorescent signal values.
Based on these statistical properties an image segmentation is performed to distinguish in the fluorescent image a target region TR and a reference region RR, wherein the reference region denotes a remaining portion in the mammal tissue other than that denoted by the target region. In FIG. 4B pixels for which the contrast to noise ratio CNR (p) for said pixel exceeds a predetermined threshold value (T_{CNR}) are identified as part of the target region TR indicated in black in FIG. 4B. The remaining pixels, indicated in white are identified as being part of the reference region RR. The contrast to noise ratio CNR (p) of a pixel is defined as $CNR \left(p\right) = \frac{FI \left(p\right) - {μ}_{R}}{c ⋅ {σ}_{R}} ,$

Therein FI(p) is the fluorescent signal value of the pixel (p) and c is a predetermined constant. In the present example c has the value 2 and the predetermined threshold value (T_{CNR}) has the value 1.

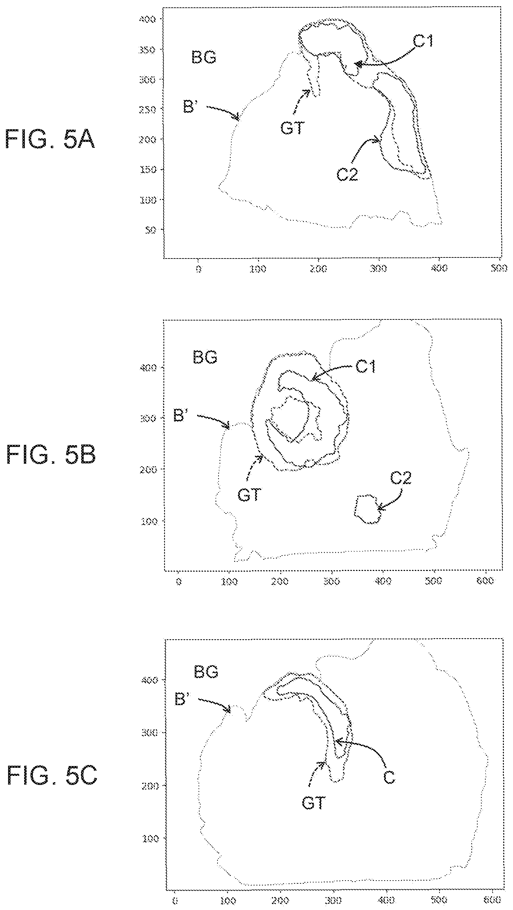

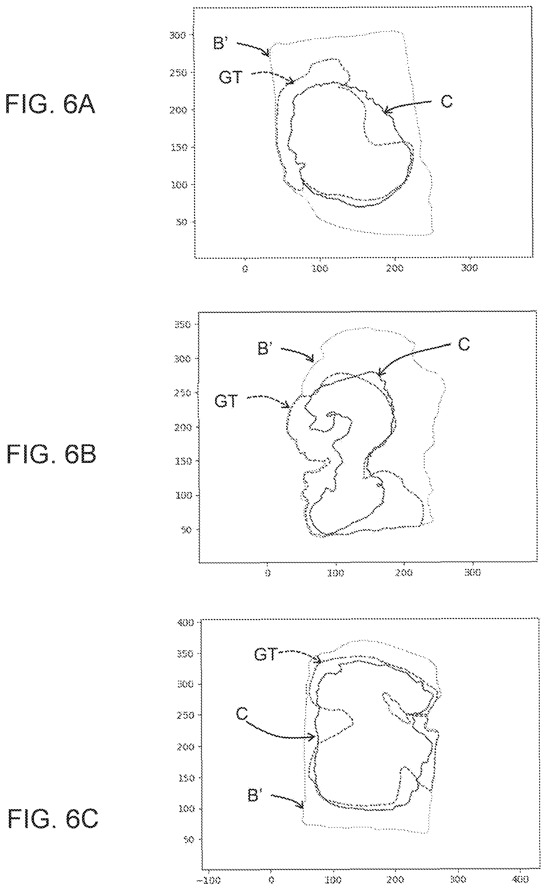

FIG. 5A, 5B, 5C and FIG. 6A, 6B and 6C show various examples wherein the method as described above is applied. The examples shown in FIG. 5A, 5B and 5C are penile squamous carcinoma tissue slices from tissue resected from a first patient. The examples shown in FIG. 6A, 6B and 6C are penile squamous carcinoma tissue slices from tissue resected from a second patient. The fluorescent images were obtained with a PEARL imaging device after the tissue was rendered fluorescent with cetuximab-IRDye800CW, i.e. the wavelength range captured is in the range of 800 nm. Therein the reference B' indicates the corrected boundary of the mammal tissue with respect to the background. References C, C1 and C2 indicate contours of a target region in the tissue estimated by the method. The ground truth, i.e. the contour of tumor tissue as determined by a pathologist is indicated by the reference GT.

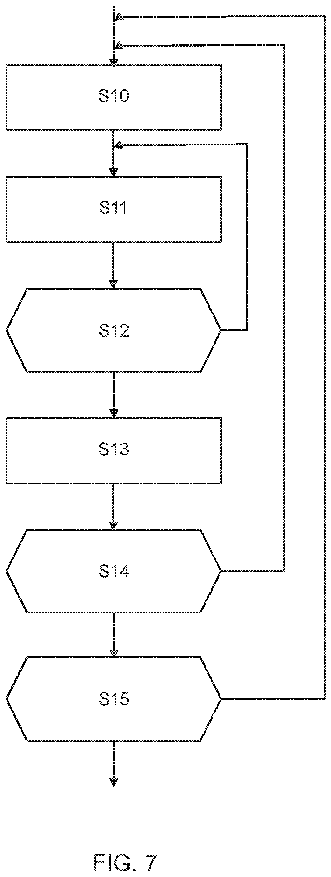

The method as described above can be used in combination with a scan trajectory-based method. An example of a scan trajectory-based method is schematically illustrated in FIG. 7.

The inspection method illustrated therein comprises a step S10 wherein at least one fluorescent signal value vector of fluorescent signal values in the fluorescent image along a scan trajectory is obtained. For practical purposes the scan trajectory is typically a line aligned with a principal axis of the fluorescent image.

In step S11 for a threshold value ts one or more candidate scan trajectory sections (typically scanline sections) are determined in which the fluorescent signal value exceeds the threshold value ts. This is repeated for a plurality of threshold values. In step S12 it is verified whether or not the procedure has been performed for all threshold values of the plurality.

The remaining sections of the scan trajectory are considered as reference sections, and statistical properties are derived of the fluorescent signal values of the pixels forming part thereof. Typically, the average value µᵣₛ and the standard deviation σᵣₛ of these fluorescent signal values are determined. As the value found for these statistical properties depends on the selection of the threshold value ts, they can be written as µᵣₛ (ts) and σᵣₛ (ts) respectively.

Having determined these statistical properties it is determined which of the pixels (p) on the scan trajectory comply with the requirement CNR(p) ≥ tr, wherein: $CNR \left(p\right) = \frac{FI \left(p\right) - {μ}_{rs} \left(ts\right)}{c ⋅ {σ}_{rs} \left(ts\right)} ,$

Therein c is a predetermined constant that is selected from a range of 1.5 to 3, for example about 2 and tr is a threshold, for example of a value 1. In step S13 it is determined for which threshold value ts of the plurality of threshold values the respective set of candidate scan trajectory sections best matches the set of one or more scan trajectory sections that are obtained using the CNR requirement referred to above. In an example the extent to which the identified scan trajectory sections match is determined by the F-measure as specified above.

Alternatively, an optimal value tₒₚₜ is determined as ${t}_{opt} = \begin{matrix}argmin \\ ts\end{matrix} \left|ts-\left({μ}_{rs}\left(ts\right)+2∗{σ}_{rs}\left(ts\right)\right)\right|$

In the embodiment of FIG. 7, the procedure in steps S10-S13 is repeated for a plurality of mutually different scan trajectories of a set of scan trajectories. To that end it is verified in step S14 whether the steps S10-S13 have been performed for all scan trajectories of a set of scan trajectories. Hence for each scan trajectory in the set of scan trajectories the value tₒₚₜ is determined as well as the partitioning of the scan trajectory into scan trajectory sections on the basis of the value tₒₚₜ. As noted, the scan trajectories are preferably lines aligned with a primary axis of the fluorescent image. For example, the set of all horizontal lines, or a subset of horizontal lines.

In the embodiment shown the procedure in steps S10- S14 is also repeated for a plurality of sets of scan trajectories. To that end it is verified in step S15 whether the steps S10-S14 have been performed for sets of scan trajectories, for example for the set of horizontal scanlines and vertical scanlines.

The method of FIG. 7 can be used in combination with the method of FIG. 1 in various ways. In one example the method of FIG. 1 provides an indication of a range where the optimal threshold value tₒₚₜ is expected to be. For example, the range is selected as ${μ}_{r} \leq {t}_{opt} \leq {μ}_{r} + 4 ∗ {σ}_{r}$ or ${μ}_{r} + {σ}_{r} \leq {t}_{opt} \leq {μ}_{r} + 3 ∗ {σ}_{r}$

In another example the method of FIG. 1 provides an extension range to limit a range of extension of the scan trajectory. The extension range may for example indicate a line segment that crosses a contour as indicated by the method of FIG. 1 and that extends a predetermined distance at both sides of the crossing position. Alternatively, the method of FIG. 1 may indicate an extension range for a scan trajectory through the target region and extending a predetermined distance at both sides of the target region.

In a still further example, the method of FIG. 1 provides an indication of an orientation of a contour of a target region to be identified. The indication is for example a main axis of a contour identified in the method of FIG. 1. Using this information the method of FIG. 1 can be optimally performed by performing the scan trajectory-based analysis with scanlines transverse to the main direction.

A suitable definition of the main axis is a line segment that minimizes an average distance measure between that line segment and the points of the contour. That is, the main axis is defined as a line segment that minimizes the average distance between said line segment and the points of the contour. As an example, the distance measure is the Euclidian distance measure, but other options are available too. A main axis can be found with the OpenCV tool "fitLine".

For practical purposes, the fluorescent image (FI) is rotated prior to performing the method of FIG. 7. In that case the rotation aligns the main axis of the contour with a coordinate axis of the fluorescent image, and the scan lines are directed along another coordinate axis of the fluorescent image (FI).

In the method of FIG. 7 described above, the threshold value ts is varied to determine for the threshold value tₒₚₜ for which it is achieved that the respective set of candidate scan trajectory sections of a scan trajectory best matches the set of one or more scan trajectory sections that are obtained using the CNR requirement referred to above. Therein the statistical properties µᵣₛ and σᵣₛ are estimated from the sections of the scan trajectory that are not identified as candidate scan trajectory sections. In an alternative approach it is presumed that the scan trajectory has a crossing at a presumed position and that the statistical properties µᵣₛ and σᵣₛ are estimated from the scan trajectory section at the side of the presumed crossing having the lowest average fluorescent value. Based on the CNR measure with these estimated statistical properties the scan trajectory is partitioned into reference scan trajectory sections and target scan trajectory sections, and it is determined if the presumed crossing coincides with a transition from a reference scan trajectory section to a target scan trajectory section or reversely. If this is the case, the presumed crossing is a candidate contour point. This approach is described in more detail in European patent application 23154545.0 filed by the same Applicant on 01.02.2023. The method of Figure 1 can provide the locations of the contour therein as heuristic information to restrict the search range of the optimal crossing positions in the alternative approach of the method of FIG. 7.

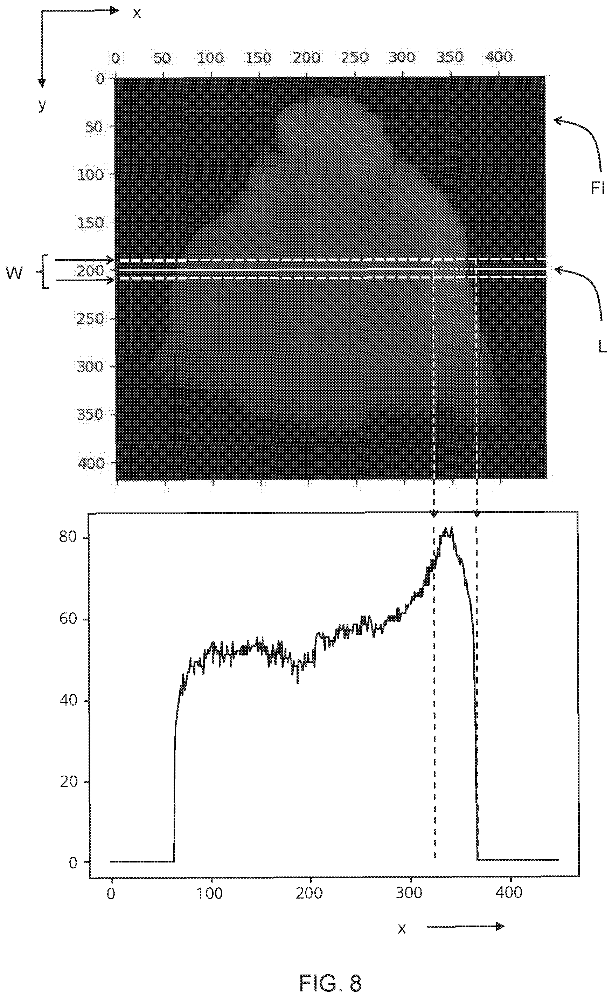

The method of FIG 7 is illustrated with reference to FIG. 8. On top, FIG. 8 shows a fluorescent image (FI) obtained from a sample of a mammal tissue. The bottom shows intensity values along a scan trajectory L in the fluorescent image (FI). In the example shown, each intensity value on the scan line is obtained as the Gaussian weighted average of the pixels in the strip W having the same x-coordinate.

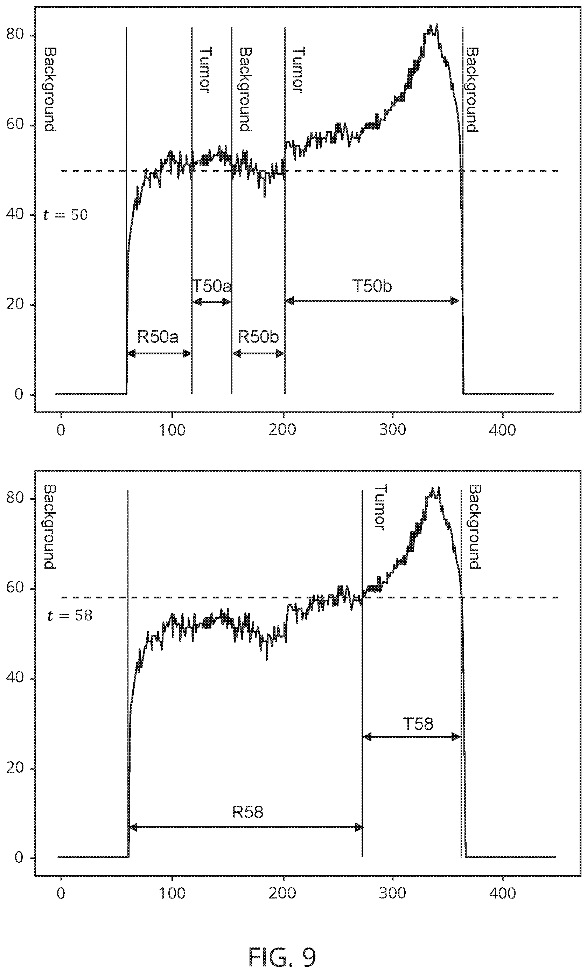

FIG. 9 shows how in step S11 for each threshold value of a plurality of threshold values a respective set of candidate scan trajectory sections is determined in which the fluorescent signal value exceeds the threshold value. The upper part of FIG. 9 shows a first example, wherein the threshold value 50 causes a partitioning with two candidate target sections T50a and T50b and two reference sections R50a and R50b. The lower part of FIG. 9 shows a partitioning with one candidate target section T58 and one reference section R58 for the threshold value 58.

For each threshold value, the statistical properties the statistical properties µᵣₛ and σᵣₛ are estimated from the fluorescent signal values in the one or more reference sections of the scan trajectory, and based on these statistical properties an alternative partitioning of the scan trajectory is determined according to the CNR criterion. The threshold tₒₚₜ is identified for which the threshold based partitioning best matches the CNR-based partitioning using the statistical properties of the one or more reference sections.

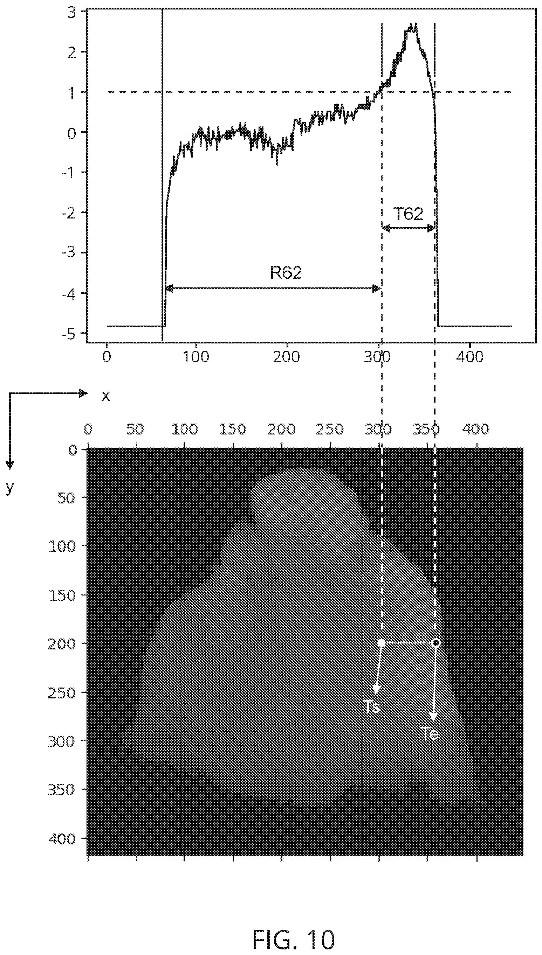

As shown in FIG. 10, in step S13 of the method of FIG. 7 it is found for this scanline that the optimal threshold is 62. Therewith the scanline is partitioned into reference section R62 and target section T62, as shown in the upper part of FIG. 10. As shown in the lower part of FIG. 10 therewith contour points Ts and Te are identified that respectively indicate the start of the target region T62 and the end of the target region when traversing the scanline in the positive x-direction.

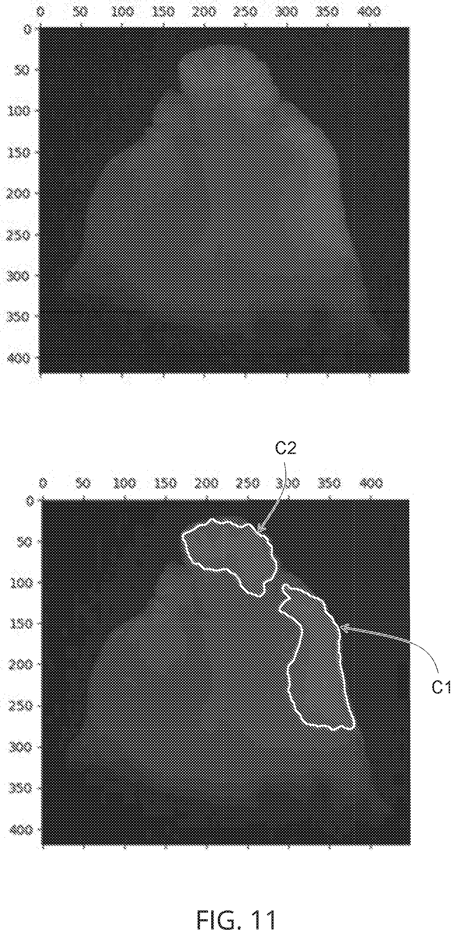

As another example, FIG. 11 shows how the method of FIG. 1 is applied to identify a first contour C1 and a second contour C2 see the lower part of FIG. 11 to the fluorescent image shown in the upper part of FIG. 11.

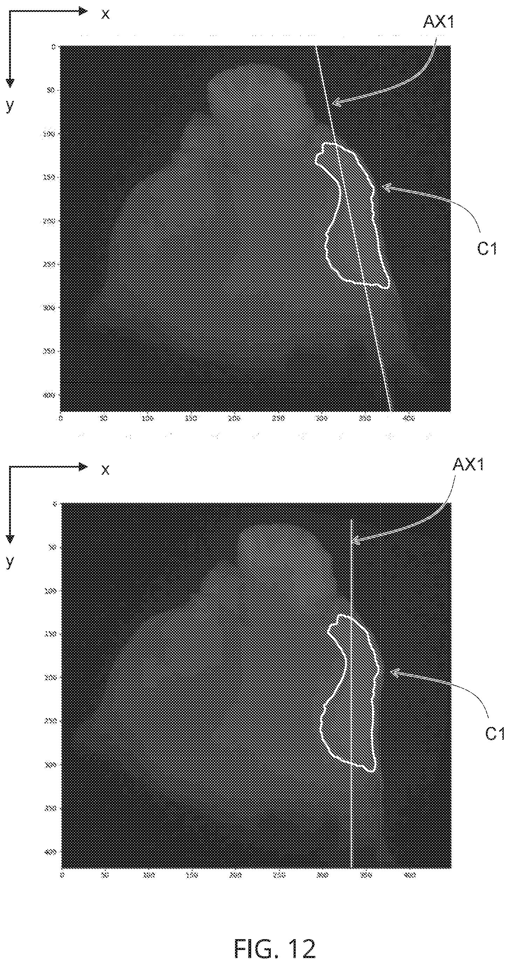

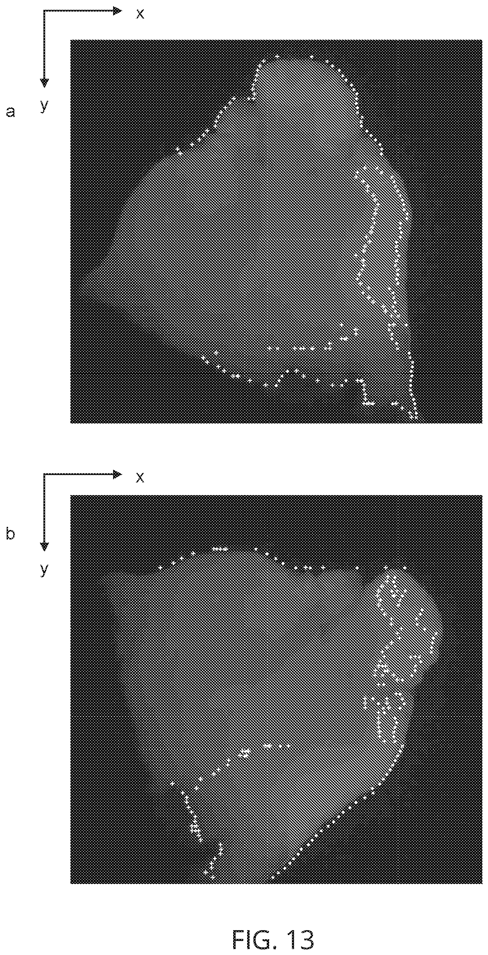

The upper part of FIG. 12 shows how a main axis AX1 of the target region with contour C1 is determined. The lower part of FIG. 12 shows how the fluorescent image (FI) is rotated such that the main axis AX1 is aligned with one of the principal axes (here the y-axis) of the fluorescent image (FI). That is, The inspection method according to the invention and , wherein prior to the step of obtaining at least one fluorescent signal value vector the fluorescent image is rotated so that the main axis of the contour coincides with a coordinate axis of the fluorescent image (FI) and wherein the scan line is directed along another coordinate axis of the fluorescent image (FI). It is noted that for contours with more complex shapes, multiple lines could be used to fit.
The fluorescent image (FI) rotated in this manner can be optimally scanned with scanlines directed according to the x-axis. Furthermore, the location of the contour C1 can provide heuristic information that reduces the scanline-based approach in FIG. 7. For example, the heuristic information indicates a spatial search range or indicates an intensity search range.
In the example shown in the upper part of FIG. 13 indicates the start points (+) and end points ( ·) of target sections identified with the threshold based version of the method of FIG. 7 using the heuristic information of the method of Figure 1 and having the image aligned with the first contour C1 indicated in FIG. 11. The lower part of FIG. 13 indicates the start points (+) and end points ( ·) of target sections identified with the threshold based version of the method of FIG. 7 using the heuristic information of the method of Figure 1 and having the image aligned with the second contour C2 indicated in FIG. 11. That is, an implementation of the inspection method according to invention, further comprises
- for at least one contour determining at least one main axis;
- obtaining at least one fluorescent signal value vector of fluorescent signal values in the fluorescent image (FI) along a scan line that is orthogonal to the main axis;
- based on information of the contour at points of intersection with the scan line, selectively performing an identification of one or more sections of the scan line where a contrast to noise ratio exceeds a predetermined level, said scan line sections each comprising a respective first end point indicative for a transition (NT) from normal tissue to tumorous tissue or infected tissue and a respective second end point indicative for a transition (TN) from tumorous tissue or infected tissue to normal tissue.

In another implementation of the e inspection method according to the invention the information on which said selectively performing an identification of one or more sections of the scan line is based comprises an intensity of the fluorescent image (FI) at the points of intersection of the contour. In another implementation of the inspection method of the invention the information on which said selectively performing an identification of one or more sections of the scan line may be based on coordinates of the points of intersection. A further implementation of the inspection method of the invention involves combining and indicating coordinates of begin points and end points of a plurality of contours in a single image. Yet another implementation of the inspection method of the invention comprises to, in a respective region of each end point determining a respective density of end points, and removing those end points for which the respective density is less than a predetermined threshold.

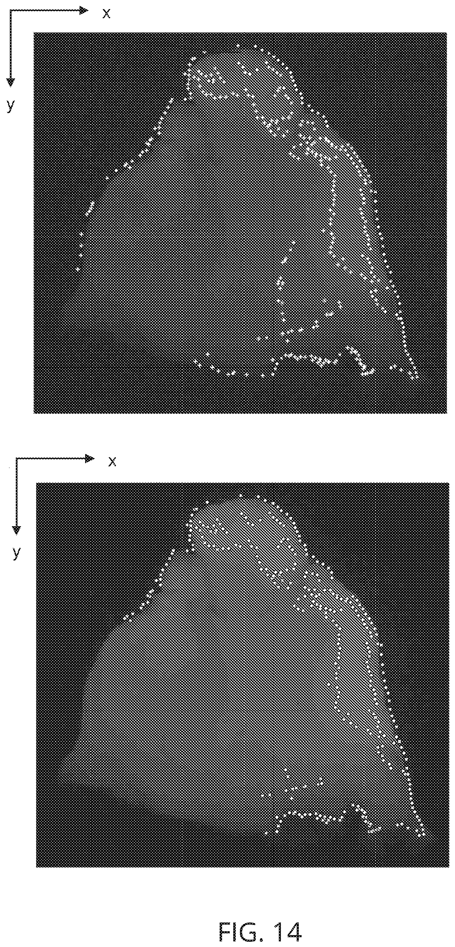

The upper part of FIG. 14 shows the points identified for each of the contours mapped into the original image.

The lower part of FIG. 14 shows how in a subsequent step isolated points are removed. That is The inspection method of the invention, further comprising rejection of isolated points. A point is considered isolated if a local point density is lower than a threshold value, that is if it is the case that in a region of predetermined size centered around the point the ratio of the number of points and the size of the region is less than a predetermined value. Typically, the size of the region is in a range selected from 100 to 1000 pixels, and the minimum number of points required to be present in the region is selected in a range from 5 to 50. Best results are obtained if the number of points is in a range of 1/30 to 1/20 the size of the range. In this example region has a radius of 40 pixels, i.e. the area of the region comprises about 500 pixels and the minimum number of points is 20.

In an additional or alternative processing step, clusters of points having a maximum pixel intensity less than a reference value are rejected. The reference value is for example the global intensity mean plus a factor of the standard deviation, as a modifiable parameter. In a further additional or alternative processing step a cluster of points is rejected if its area (to be computed) is lower than a certain fraction of the total image area.

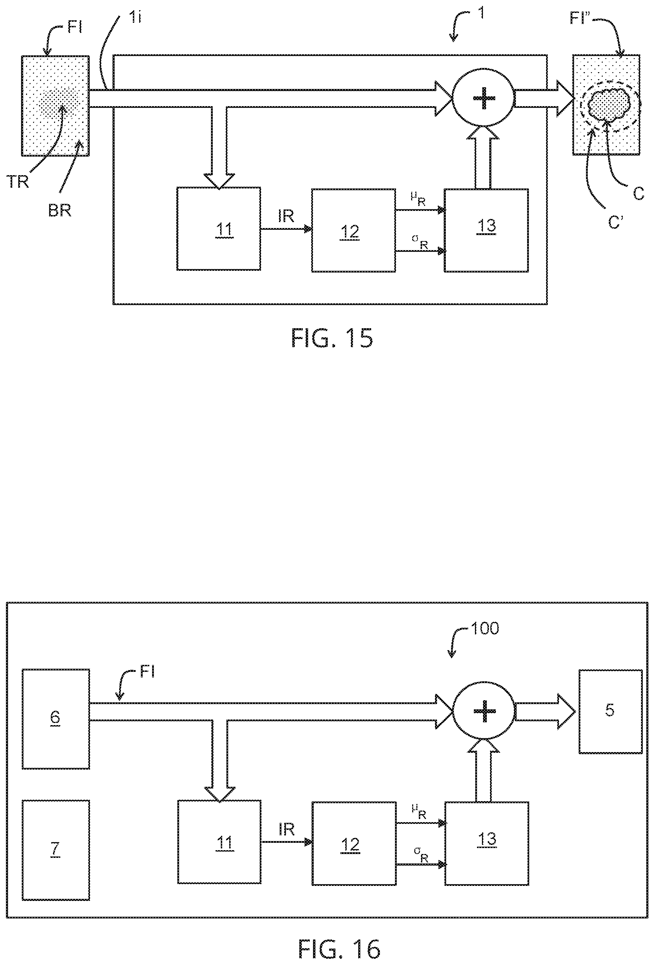

FIG. 15 schematically shows an inspection device 1 for inspection of a mammal tissue that is configured to obtain a fluorescent image FI of the mammal tissue MT being rendered photosensitive with a fluorescent agent and being irradiated with excitation light. The fluorescent image FI comprises an array of pixels having respective fluorescent signal values. The fluorescent signal values comprise a first number N1 of fluorescent signal values that representing the mammal tissue in the fluorescent image. In case a background is present in the image the first number is less than the total number of pixels in the fluorescent image (FI). Otherwise, the first number N1 may be equal to the total number of pixels. In the example shown the inspection device 1 obtains the fluorescent image (FI) from an external input 1i. Alternatively the inspection device may include a camera for capturing the image. Also, the inspection device may include a proper excitation light source.

The inspection device 1 comprises a reference value determination module 11 that is configured to determine a reference value IR such that a second number N2 of fluorescent signal values comprised in the first number of fluorescent signal values is smaller than or equal to the reference value IR and the remainder of the first number of fluorescent signal values exceeds the reference value. In one example the second number is a predetermined fraction of the first number for example the N2/N1 = 0.5, in which case the reference value is the median. A statistical property evaluation module 12 determines an average fluorescent signal value (µ_{R}) and a standard deviation (σ_{R}) of the fluorescent signal values comprised in the second number N2 of fluorescent pixel values.

A segmentation module 13 performs an image segmentation to distinguish in the fluorescent image (FI) a target region (TR) to denote a portion in the mammal tissue (MT) that is identified as tumorous tissue and a reference region (RR) to denote a remaining portion in the mammal tissue (MT). The segmentation module operates in a pixelwise manner in that it determines per pixel (p) that it is part of the target region (TR) if a contrast to noise ratio CNR (p) for said pixel exceeds a predetermined threshold value (T_{CNR}) and to determine that the pixel is part of the reference region (RR) otherwise, wherein the contrast to noise ratio CNR (p) of a pixel is defined as $CNR \left(p\right) = \frac{FI \left(p\right) - {μ}_{R}}{c ⋅ {σ}_{R}} ,$ wherein FI(p) is the fluorescent signal value of the pixel (p) and c is a predetermined constant. Optimal values are T_{CNR} = 1 and c = 2.

The segmentation module 13 further is configured to identify a contour C of the target region. The contour C is a primary contour that indicates a border of the target area with the reference area. In an implementation of the inspection method of the invention the at least one contour comprises a secondary contour (C') that extends at a distance outside a border of the target area with the reference area. Thus. the segmentation module 13 further is configured to identify a secondary contour C' that extends at a distance outside a border of the target area with the reference area. In the example shown the segmentation module 13 is configured to generate the secondary contour C' such that it extends at a distance outside the border in a manner that avoids an intersection of a specified anatomical structure. Further, the secondary contour (C') may extend at a distance outside the border in a manner that avoids an intersection of a specified anatomical structure.

FIG. 16 shows a medical treatment device 100 that comprises in addition to the elements of the inspection device further a source 7 of excitation light for irradiating a mammal tissue a camera 6 to obtain a fluorescent image FI of the mammal tissue and a treatment equipment 5 to perform a medical treatment to excise or irradiate the tumor in accordance with the constructed contour or to activate a therapeutic substance in the range specified by the constructed contour.

The present invention renders it possible to more accurately identify a contour of an affected tissue, e.g. a tissue affected by a tumor, or an infected tissue. A precise knowledge of the location of the contour is of crucial importance for treatment. This is for example important for surgical removal of an affected tissue, to ascertain that no affected tissue remains after surgery, but also to ascertain that not more healthy tissue is removed than necessary. Likewise, the precise knowledge of the location of the contour is crucial for applying photodynamic therapy. Therewith a therapeutic substance is locally activated within the region of the tissue that is indicated as affected. Outside the indicated region the therapeutic substance is not activated, so as to mitigate damage of healthy tissue.

In one example, the therapeutic substance may be activated to act as a chemotherapeutic agent within a region indicated as comprising a tumor. In another example the therapeutic substance may be activated to have an antimicrobial activity within a region indicated as comprising a infected tissue.

The photodynamic therapy hence involves at least the following steps. A fluorescence image is obtained in-vivo of a mammal tissue that has been rendered photosensitive with a fluorescent agent and irradiated with excitation light. The so obtained fluorescence image comprises an array of pixels having respective fluorescent signal values.

The fluorescent agent is used to visualize affected tissue, such as tumor tissue or an infected tissue. In one example the fluorescent agent is a targeted fluorescent tracer such as Cetuximab-IRDye800CW or hexvix for imaging tumor tissue and/or infection and track medicinal therapy. In another example, the fluorescent agent is an untargeted fluorescent dye such as Indocyanine green (ICG) for imaging tissue perfusion.

Exemplary agents for imaging an infected tissue are vancomycin-IRDye800CW and 1D9-IRDye800CW. Therein 1D9 is a monoclonal antibody against Staphylococcus aureus (including MRSA). Further examples are presented in the references included in the ANNEX.

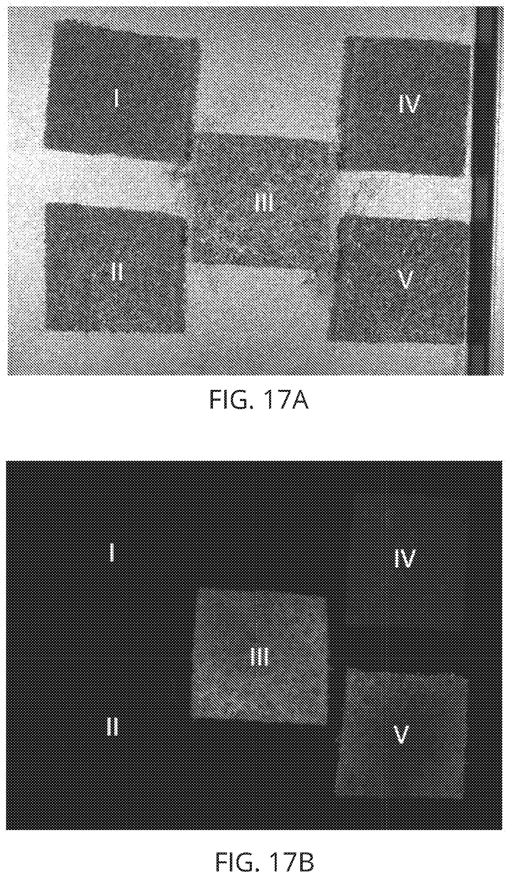

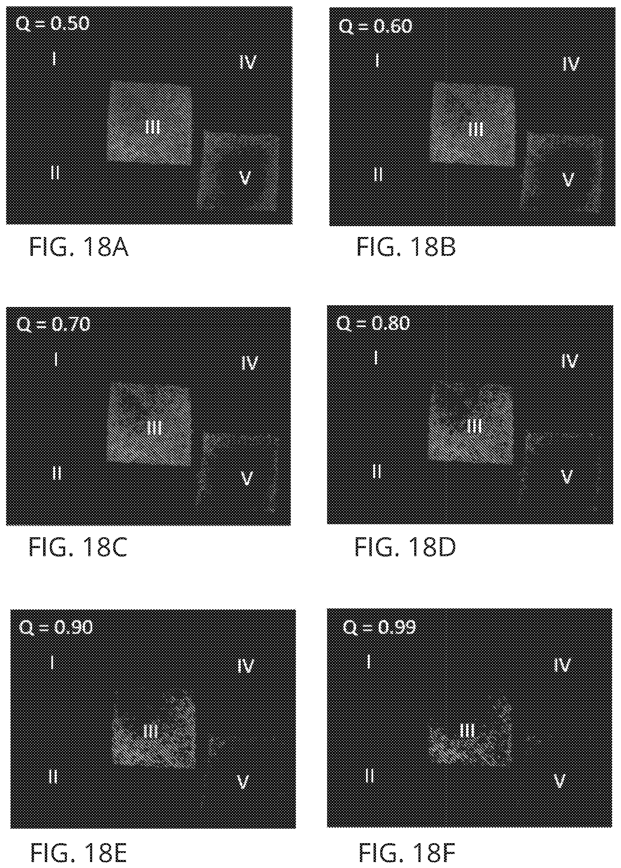

An example of the latter application is illustrated in FIG. 17A, 17B and FIG. 18A-18F.

FIG. 17A shows an image of a tray with five samples, I - V of a foam which are prepared as specified in the table below.

FIG. 17B shows a fluorescence image using a Pearl imaging system at a wavelength of 800 nm, obtained from the same tray with samples.

| Sample | Tracer (Y/N) | Bacteria present (Y/N) |
|---|---|---|
| I | N | N |
| II | N | Y |
| III | Y | Y: |
| IV | Y | N |
| V | Y | Y |

The first sample I is a sterile foam, wherein further no tracer is present.

The second sample, foam II has been immersed in a solution comprising a Staphylococcus aureus culture but not comprising a tracer.

The third sample, foam III has been immersed in a solution comprising a Staphylococcus aureus culture and using an amount of 10 µL of a tracer tIRDye800CW solution.

The fourth sample. Foam IV has been immersed in a sterile solution comprising the tracer tIRDye800CW.

The fifth sample, foam V has been immersed in a solution comprising a Staphylococcus aureus culture and an amount of 20 µL of a tracer tIRDye800CW solution.

FIG. 18A-18F show segmentations of the fluorescence image of FIG. 17B according to different quartile settings Q ranging from Q = 0.50 in FIG. 18A to Q = 0.99 in FIG. 18F. Hence, what is shown therein are the fraction (1-Q) of pixels having a fluorescence intensity higher than the fraction Q of non-selected pixels.

According the reference value used in step S7 to determine the average fluorescent signal value µ_{R} and the standard deviation σ_{R} is such that a fraction Q of the pixels have a fluorescence intensity less than the reference value and the fraction 1-Q has a fluorescence intensity greater than or equal to the reference value. It has been found that best results are obtained with a value Q = 0.70.

As part of the present research the inventors conjectured that the fluorescent radiation observed at the border of an affected tissue, e.g. a tumorous tissue or an infected tissue, is stray radiation, i.e. fluorescent radiation that originates from the affected tissue that is scattered in the healthy tissue near the border. The inventors further conjectured that as a result, the intensity of the fluorescent radiation is expected to decline in a direction away from the border according to an exponential function i.e. $I \left(d\right) = {I}_{0} {e}^{- α ⋅ d}$

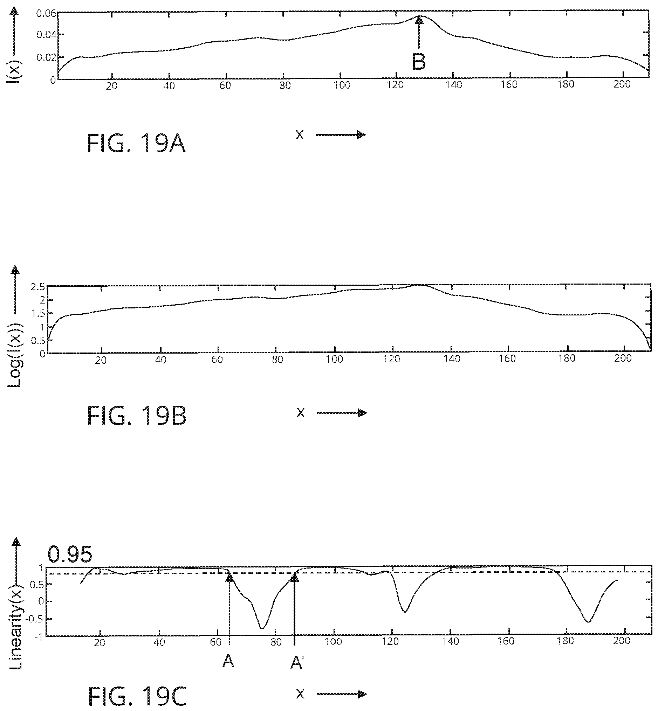

Wherein I₀ is the intensity measured at a position of the border of the affected tissue, and I(d) is the intensity at a position in the healthy tissue at a distance d from the border position, and wherein α is a constant. Based on these observations the following method is described with reference to FIG. 19A-C.

FIG. 19A shows a measured fluorescence value I(x) as a function of a position along a scanning path in the fluorescence image. In this case the scanning path is a scan line in the x-direction of the image, but the scan-line may have any other direction. Also, the scanning path may be a curved path. As shown in FIG. 19A, the scan range extends from 0 to about 210 pixels. Due to the relatively high value of the function I(x) at the position B, it is presumed that pixel having coordinate x = 130 represents a portion of the affected tissue. It is now shown how a border of the affected tissue at a position left of B is determined.

FIG. 19B shows the logarithmic value log(I(x)) of the measured fluorescence value I(x). In view of the observations above, the value log(I(x)) is expected to decline in a direction away from the border according to the function $log \left(I\left(d\right)\right) = - α ⋅ d ⋅ log \left(I\left(x0\right)\right)$

Accordingly, the function log(I(x)) is expected to have linear portions for areas in the healthy tissue, near the affected tissue. To identify these areas, the linearity of the function log (I(x)) as a function of x is determined by matching the curve in a sliding window with a linear function. By way of example the sliding window has length of 30 pixels and a linear function is matched with least squares method. Also, a different length may be applicable, however the length should not be too small, in order to have an adequate signal to noise ratio. Preferably the length is at least 10 pixels. In order to have a sufficiently high resolution, the length should not be too large. However, this depends on the resolution of the image (mm.pixel⁻¹) . For the present case, wherein the resolution is 85µm, the length of the sliding window is preferably not larger than 70 pixels. However, in case the resolution is higher with a certain factor, then also the maximum length of the window can be larger with that factor. The sliding window is symmetrical to avoid a bias in the Linearity function. However, it may be contemplated to use an asymmetric window instead and to compensate for the bias.

In FIG. 19C the correlation of the function log (I(x)) within the sliding window is shown as Linearity(x). Therein the value 1 indicates the extreme case that the function log (I(x)) within the sliding window is exactly linear, and the value 0 indicates that the function log (I(x)) within the sliding window maximally deviates from a linear function. It is noted that the function Linearity(x) will also approach 1 in regions wherein the intensity I(x) is constant. For practical purposes it is presumed that the function log (I(x)) is linear if the function Linear(x) is at least 0.95, as is indicated by the dashed line in FIG. 19C. In the direction of the x-axis, the function decreases below this threshold value at position A. This is considered the location where the scanline intersects the border of the affected tissue.

At this point is the transition from the region wherein the function log (I(x)) linearly increases to the region wherein the function log (I(x)) assumes a more constant value. The point A' indicates the position along the scanline where the more constant value has been achieved. Likewise, a location where the affected tissue borders the health tissue at a position right of B can be determined.

The method may be repeated with different scanlines. For example, in this case, wherein the scanlines extend in the direction x, the border positions can be determined for respective scanlines with different y-coordinates, to estimate the contour of the affected tissue within the healthy tissue. The method may alternatively or additionally be applied with scanlines in different directions

The method as described with reference to FIG. 19A-19C can be used autonomously but can also be used as a preprocessing step for further analyses. For example, based on the contour identified herewith it can be estimated which number of pixels in the image represents affected tissue and which number represents healthy tissue. For example, if the image of the tissue comprises an area having a size of N0 pixels representing affected tissue and an area having a size of N2 pixels having healthy tissue, then the predetermined fraction used for determining the reference value IR is N2/(N0+N2). Also, the method is applicable as a preprocessing step in the method described in international patent application PCT/NL2024/050047 filed by the same Applicant. Therein this preprocessing step may be used to determine a tentatively assigned position.

Alternatively, the method as described with reference to FIG. 19A-19C can be used as a post-processing step to apply corrections to a segmentation result obtained with another method.

In summary, the inspection method as elucidated herewith with reference to FIG. 19A-19C comprises the following steps.

It is presumed that a fluorescence image has been captured of a mammal tissue that has been rendered photosensitive with a fluorescent agent and irradiated with excitation light, the fluorescent image (FI) comprising an array of pixels having respective fluorescent signal values.

The fluorescence image may be obtained ex-vivo so as to verify that an affected tissue has been completely removed during surgery. Alternatively, the fluorescence image may be obtained in-vivo for the purpose of assisting a surgeon during operation.

The fluorescent agent is used to visualize affected tissue, such as tumor tissue or an infected tissue. Exemplary agents for imaging an infected tissue are vancomycin-IRDye800CW and 1D9-IRDye800CW. Therein 1D9 is a monoclonal antibody against Staphylococcus aureus (including MRSA). Further examples are presented in the references included in the ANNEX.

At least one sequence of fluorescence values I(x) is obtained from pixels along positions x of a scan path. A logarithmic value is determined of each of the values of the sequence of fluorescence values I(x). Alternatively, it may be contemplated to compute the logarithmic value of all fluorescence values I(x) in the image and to subsequently obtain a sequence of logarithmic values log(I(x)) from pixels along positions x of a scan path. However, it is generally preferred to first obtain the sequence of fluorescence values and to subsequently apply the logarithmic function so that the logarithmic function need not be applied to pixels that are not involved in the computation.

Then it is determined to which extent a sequence of logarithmic values log(I(x)) locally approximates a linear function.

A transition from healthy tissue to affected tissue boundary is estimated at a location where the linearity starts to decrease significantly, e.g. decreases below a threshold value, e.g. 0.95.

The scan path can be a scanline in an arbitrary direction but may alternatively be a curved path. Nevertheless, a scan line or a scan path with a negligible curvature is preferred to avoid that the curvature of the path would affect the linearity of a sequence of values in the boundary regions.

### ANNEX: Further References

Empowering antimicrobial photodynamic therapy of Staphylococcus aureus infections with potassium iodide.
   Bispo M, Suhani S, van Dijl JM.J Photochem Photobiol B. 2021 Dec;225:112334. doi: 10.1016/j.jphotobiol.2021.112334.
Comparison of two fluorescent probes in preclinical non-invasive imaging and image-guided debridement surgery of Staphylococcal biofilm implant infections. Park HY, Zoller SD, Hegde V, Sheppard W, Burke Z, Blumstein G, Hamad C, Sprague M, Hoang J, Smith R, Romero Pastrana F, Czupryna J, Miller LS, López-Álvarez M, Bispo M, van Oosten M, van Dijl JM, Francis KP, Bernthal NM.Sci Rep. 2021 Jan 15;11(1):1622. doi: 10.1038/s41598-020-78362-7.
Fighting Staphylococcus aureus infections with light and photoimmunoconjugates.
   Bispo M, Anaya-Sanchez A, Suhani S, Raineri EJM, López-Álvarez M, Heuker M, Szymański W, Romero Pastrana F, Buist G, Horswill AR, Francis KP, van Dam GM, van Oosten M, van Dijl JM.JCI Insight. 2020 Nov 19;5(22):e139512. doi: 10.1172/jci.insight.139512.
A Facile and Reproducible Synthesis of Near-Infrared Fluorescent Conjugates with Small Targeting Molecules for Microbial Infection Imaging.
   Reeßing F, Bispo M, López-Álvarez M, van Oosten M, Feringa BL, van Dijl JM, Szymański W.ACS Omega. 2020 Aug 26;5(35):22071-22080. doi: 10.1021/acsomega.0c02094.
Novel in vivo mouse model of shoulder implant infection.
   Sheppard WL, Mosich GM, Smith RA, Hamad CD, Park HY, Zoller SD, Trikha R, McCoy TK, Borthwell R, Hoang J, Truong N, Cevallos N, Clarkson S, Hori KR, van Dijl JM, Francis KP, Petrigliano FA, Bernthal NM.J Shoulder Elbow Surg. 2020 Jul;29(7):1412-1424. doi: 10.1016/j.jse.2019.10.032.
Multimodal imaging guides surgical management in a preclinical spinal implant infection model.
   Zoller SD, Park HY, Olafsen T, Zamilpa C, Burke ZD, Blumstein G, Sheppard WL, Hamad CD, Hori KR, Tseng JC, Czupryna J, McMannus C, Lee JT, Bispo M, Romero Pastrana F, Raineri EJ, Miller JF, Miller LS, van Dijl JM, Francis KP, Bernthal NM.JCI Insight. 2019 Feb 7;4(3):e124813. doi: 10.1172/jci.insight.124813.
Noninvasive optical and nuclear imaging of Staphylococcus-specific infection with a human monoclonal antibody-based probe.
   Romero Pastrana F, Thompson JM, Heuker M, Hoekstra H, Dillen CA, Ortines RV, Ashbaugh AG, Pickett JE, Linssen MD, Bernthal NM, Francis KP, Buist G, van Oosten M, van Dam GM, Thorek DLJ, Miller LS, van Dijl JM.Virulence. 2018 Jan 1;9(1):262-272. doi: 10.1080/21505594.2017.1403004.
Real-time in vivo imaging of invasive- and biomaterial-associated bacterial infections using fluorescently labelled vancomycin.
   van Oosten M, Schäfer T, Gazendam JA, Ohlsen K, Tsompanidou E, de Goffau MC, Harmsen HJ, Crane LM, Lim E, Francis KP, Cheung L, Olive M, Ntziachristos V, van Dijl JM, van Dam GM.Nat Commun. 2013;4:2584. doi: 10.1038/ncomms3584.

## Claims

1. An inspection method of inspecting a fluorescent image captured of a mammal tissue that has been rendered photosensitive with a fluorescent agent and irradiated with excitation light, the fluorescent image (FI) comprising an array of pixels having respective fluorescent signal values, the fluorescent signal values comprising a first number (N1) of fluorescent signal values representing the mammal tissue in the fluorescent image; the method comprising:
determining (S6) a reference value (IR) such that a second number (N2) of fluorescent signal values comprised in the first number of fluorescent signal values is smaller than or equal to the reference value and the remainder of the first number of fluorescent signal values exceeds the reference value, which second number is a predetermined fraction of the first number;
determining (S7) an average fluorescent signal value (µ_{R}) and a standard deviation (σ_{R}) of those fluorescent signal values comprised in the second number of fluorescent signal values;
performing (S8) an image segmentation to distinguish in the fluorescent image (FI) a target region (TR) to denote a portion in the mammal tissue (MT) that is identified as tumorous tissue or infected tissue and a reference region (RR) to denote a remaining portion in the mammal tissue (MT), comprising determining per pixel (p) that it is part of the target region (TR) if a contrast to noise ratio CNR (p) for said pixel exceeds a predetermined threshold value (T_{CNR}) and determining that the pixel is part of the reference region (RR) otherwise, wherein the contrast to noise ratio CNR (p) of a pixel is defined as $CNR \left(p\right) = \frac{FI \left(p\right) - {μ}_{R}}{c ⋅ {σ}_{R}} ,$
wherein FI(p) is the fluorescent signal value of the pixel (p) and c is a predetermined constant;
identifying (S9) at least one contour C of the target region TR.

2. The inspection method according to claim 1, wherein the predetermined threshold value is 1 and the predetermined constant is 2.

3. The inspection method according to claim 1 or 2, wherein the fluorescent image (FI) is further captured (S4) of a background, and wherein the method further comprises:
performing (S5) a preliminary image segmentation to distinguish in the fluorescent image (FI) a foreground region (FR) representing the mammal tissue (MT) and a background region (BR) representing the background, comprising determining per pixel that it is part of the foreground region (FR) if the fluorescent signal value (FSV) significantly exceeds an average fluorescent signal value determined for the background taking into account a standard deviation of fluorescent signal values (FSV) in the background and determining that the pixel is part of the background region (BR) otherwise.

4. The inspection method according to claim 3, wherein the average fluorescent signal value and the standard deviation of fluorescent signal values are determined (S2A) from a portion (BP) of the fluorescent image (FI) that is designated as representing the background.

5. The inspection method according to one of the preceding claims, wherein the fluorescent image of the mammal tissue is captured in-vivo.

6. The inspection method according to one of the preceding claims, wherein the reference value is the value for a predetermined k-th q-quantile of the histogram of the fluorescence signal values and the predetermined k-th q-quantile is set in accordance with an expected tumorous tissue area ratio rₑ of a tumorous tissue area to the total tissue area in the fluorescent image (FI).

7. The inspection method according to any of the preceding claims, further comprising a scan trajectory-based evaluation that includes:
obtaining (S10) at least one fluorescent signal value vector of fluorescent signal values in the fluorescent image (FI) along a scan trajectory;
for each threshold value of a plurality of threshold values determining (S11) a respective set of candidate scan trajectory sections in which the fluorescent signal value exceeds the threshold value and determining statistical properties of sections of the scan trajectory not being candidate scan trajectory sections;
determining (S13) for which threshold value of the plurality of threshold values the respective set of candidate scan trajectory sections best matches the image segmentation of the fluorescent image (FI) along the scan trajectory according to a contrast to noise ratio-based segmentation using the determined statistical properties.

8. The inspection method according to claim 7 wherein the procedure described therein is repeated (S14) for a plurality of mutually different scan trajectories of a set of scan trajectories and in particular the procedure described therein is repeated (S15) for a plurality of sets of scan trajectories.

9. The inspection method according to any of the preceding claims 1 to 8, further comprising
for at least one contour determining at least one main axis;
obtaining at least one fluorescent signal value vector of fluorescent signal values in the fluorescent image (FI) along a scan line that is orthogonal to the main axis;
based on information of the contour at points of intersection with the scan line, selectively performing an identification of one or more sections of the scan line where a contrast to noise ratio exceeds a predetermined level, said scan line sections each comprising a respective first end point indicative for a transition (NT) from normal tissue to tumorous tissue or infected tissue and a respective second end point indicative for a transition (TN) from tumorous tissue or infected tissue to normal tissue.

10. The inspection method according to claim 9, wherein prior to the step of obtaining (S22) at least one fluorescent signal value vector the fluorescent image (FI) is rotated (S21) so that the main axis of the contour coincides with a coordinate axis of the fluorescent image (FI) and wherein the scan line is directed along another coordinate axis of the fluorescent image (FI).

11. The inspection method of claim 1, further comprising the steps of:
obtaining at least one sequence of respective logarithmic fluorescence signal values of respective subsequent pixels that are arranged along a scan trajectory within the fluorescent image, wherein the scan trajectory starts in a position identified as being part of the reference region in the fluorescence image;
computing an indicator for a local linearity of the logarithmic fluorescence signal value as a function of the position in the at least one sequence;
identifying a position in the sequence wherein the indicator indicates that the logarithmic fluorescence signal value as a function of the position in the sequence is no longer linear, the identified position being a candidate border position for the border between the normal tissue and the tumor tissue or infected tissue.

12. An inspection device (1) for inspection of a mammal tissue configured to:
obtain a fluorescent image (FI) of the mammal tissue (MT) being rendered photosensitive with a fluorescent agent and being irradiated with excitation light, the fluorescent image comprising an array of pixels having respective fluorescent signal values, the fluorescent signal values comprising a first number of fluorescent signal values representing the mammal tissue in the fluorescent image;
determining (S6) a reference value (IR) such that a second number (N2) of fluorescent signal values comprised in the first number of fluorescent signal values is smaller than or equal to the reference value and the remainder of the first number of fluorescent signal values exceeds the reference value, which second number is a predetermined fraction of the first number;
determine an average fluorescent signal value (µ_{R}) and a standard deviation (σ_{R}) of the fluorescent signal values comprised in the second number of fluorescent pixel values;
perform an image segmentation to distinguish in the fluorescent image (FI) a target region (TR) to denote a portion in the mammal tissue (MT) that is identified as tumorous tissue or infected tissue and a reference region (RR) to denote a remaining portion in the mammal tissue (MT), wherein the device is configured to determine per pixel (p) that it is part of the target region (TR) if a contrast to noise ratio CNR (p) for said pixel exceeds a predetermined threshold value (T_{CNR}) and to determine that the pixel is part of the reference region (RR) otherwise, wherein the contrast to noise ratio CNR (p) of a pixel is defined as $CNR \left(p\right) = \frac{FI \left(p\right) - {μ}_{R}}{c ⋅ {σ}_{R}} ,$
wherein FI(p) is the fluorescent signal value of the pixel (p) and c is a predetermined constant;
identify a contour of the target region (TR).

13. An inspection device (1) for inspection of a mammal tissue as claimed in Claim 12, and further configured to perform the method of any one of Claims 2 to 11.

14. The inspection device according to any of the claims 12 or 13, wherein the at least one contour comprises the primary contour (C) that indicates a border of the target area with the reference area and the at least one contour comprises a secondary contour (C') that extends at a distance outside a border of the target area with the reference area.

15. A medical treatment device (100) comprising an inspection device as claimed in any one of Claim 12 to 14, further comprising a source (7) of excitation light for irradiating the mammal tissue and a treatment equipment (5) to perform a medical treatment to excise or irradiate the tumor in accordance with the constructed contour or to activate a therapeutic substance in the range specified by the constructed contour.

## Patentansprüche

1. Inspektionsverfahren zum Inspizieren eines Fluoreszenzbildes, aufgenommen von einem Säugetiergewebe, das mit einem Fluoreszenzmittel lichtempfindlich gemacht wurde und mit Anregungslicht bestrahlt wurde, wobei das Fluoreszenzbild (FI) eine Anordnung von Pixeln mit jeweiligen Fluoreszenzsignalwerten umfasst, wobei die Fluoreszenzsignalwerte eine erste Anzahl (N1) von Fluoreszenzsignalwerten umfassen, die das Säugetiergewebe in dem Fluoreszenzbild darstellen; wobei das Verfahren umfasst:
Bestimmen (S6) eines Referenzwerts (IR) derart, dass eine zweite Anzahl (N2) von Fluoreszenzsignalwerten, die in der ersten Anzahl von Fluoreszenzsignalwerten enthalten ist, kleiner als oder gleich dem Referenzwert ist und der Rest der ersten Anzahl von Fluoreszenzsignalwerten den Referenzwert überschreitet, wobei die zweite Anzahl ein vorbestimmter Bruchteil der ersten Anzahl ist;
Bestimmen (S7) eines durchschnittlichen Fluoreszenzsignalwerts (µ_{R}) und einer Standardabweichung (σ_{R}) jener Fluoreszenzsignalwerte, die in der zweiten Anzahl von Fluoreszenzsignalwerten enthalten sind;
Durchführen (S8) einer Bildsegmentierung, um in dem Fluoreszenzbild (FI) eine Zielregion (TR), um einen Abschnitt in dem Säugetiergewebe (MT) zu bezeichnen, der als Tumorgewebe oder infiziertes Gewebe identifiziert wird, und eine Referenzregion (RR), um einen verbleibenden Abschnitt in dem Säugetiergewebe (MT) zu bezeichnen, zu unterscheiden, umfassend Bestimmen pro Pixel (p), dass es Teil der Zielregion (TR) ist, wenn ein Kontrast-Rausch-Verhältnis CNR (p) für das Pixel einen vorbestimmten Schwellenwert (T_{CNR}) überschreitet, und andernfalls Bestimmen, dass das Pixel Teil der Referenzregion (RR) ist, wobei das Kontrast-Rausch-Verhältnis CNR (p) eines Pixels definiert ist als $CNR \left(p\right) = \frac{FI \left(p\right) - {μ}_{R}}{c ⋅ {σ}_{R}} ,$
wobei FI(p) der Fluoreszenzsignalwert des Pixels (p) ist und c eine vorbestimmte Konstante ist;
Identifizieren (S9) mindestens einer Kontur C der Zielregion TR.

2. Inspektionsverfahren nach Anspruch 1, wobei der vorbestimmte Schwellenwert 1 ist und die vorbestimmte Konstante 2 ist.

3. Inspektionsverfahren nach Anspruch 1 oder 2, wobei ferner das Fluoreszenzbild (FI) eines Hintergrundes aufgenommen wird (S4), und wobei das Verfahren ferner umfasst:
Durchführen (S5) einer vorläufigen Bildsegmentierung, um in dem Fluoreszenzbild (FI) eine Vordergrundregion (FR), die das Säugetiergewebe (MT) darstellt, und eine Hintergrundregion (BR), die den Hintergrund darstellt, zu unterscheiden, umfassend Bestimmen pro Pixel, dass es Teil der Vordergrundregion (FR) ist, wenn der Fluoreszenzsignalwert (FSV) einen durchschnittlichen Fluoreszenzsignalwert, der für den Hintergrund bestimmt wird, unter Berücksichtigung einer Standardabweichung von Fluoreszenzsignalwerten (FSV) in dem Hintergrund signifikant überschreitet, und andernfalls Bestimmen, dass das Pixel Teil der Hintergrundregion (BR) ist.

4. Inspektionsverfahren nach Anspruch 3, wobei der durchschnittliche Fluoreszenzsignalwert und die Standardabweichung von Fluoreszenzsignalwerten aus einem Abschnitt (BP) des Fluoreszenzbildes (FI), der als den Hintergrund darstellend bezeichnet wird, bestimmt werden (S2A).

5. Inspektionsverfahren nach einem der vorhergehenden Ansprüche, wobei das Fluoreszenzbild des Säugetiergewebes in-vivo aufgenommen wird.

6. Inspektionsverfahren nach einem der vorhergehenden Ansprüche, wobei der Referenzwert der Wert für ein vorbestimmtes k-tes q-Quantil des Histogramms der Fluoreszenzsignalwerte ist und das vorbestimmte k-te q-Quantil gemäß einem erwarteten Tumorgewebeflächenverhältnis rₑ einer Tumorgewebefläche zu der Gesamtgewebefläche in dem Fluoreszenzbild (FI) eingestellt wird.

7. Inspektionsverfahren nach einem der vorhergehenden Ansprüche, ferner umfassend eine auf einer Abtasttrajektorie basierende Auswertung, die umfasst:
Erhalten (S10) mindestens eines Fluoreszenzsignalwertvektors von Fluoreszenzsignalwerten in dem Fluoreszenzbild (FI) entlang einer Abtasttrajektorie;
für jeden Schwellenwert einer Vielzahl von Schwellenwerten Bestimmen (S11) eines jeweiligen Satzes von Kandidaten-Abtasttrajektorienabschnitten, in denen der Fluoreszenzsignalwert den Schwellenwert überschreitet, und Bestimmen statistischer Eigenschaften von Abschnitten der Abtasttrajektorie, die keine Kandidaten-Abtasttrajektorienabschnitte sind;
Bestimmen (S13), für welchen Schwellenwert der Vielzahl von Schwellenwerten der jeweilige Satz von Kandidaten-Abtasttrajektorienabschnitten am besten mit der Bildsegmentierung des Fluoreszenzbildes (FI) entlang der Abtasttrajektorie gemäß einer auf einem Kontrast-Rausch-Verhältnis basierenden Segmentierung unter Verwendung der bestimmten statistischen Eigenschaften übereinstimmt.

8. Inspektionsverfahren nach Anspruch 7, wobei die darin beschriebene Prozedur für eine Vielzahl von voneinander verschiedenen Abtasttrajektorien eines Satzes von Abtasttrajektorien wiederholt wird (S14) und insbesondere die darin beschriebene Prozedur für eine Vielzahl von Sätzen von Abtasttrajektorien wiederholt wird (S15).

9. Inspektionsverfahren nach einem der vorhergehenden Ansprüche 1 bis 8, ferner umfassend
für mindestens eine Kontur Bestimmen mindestens einer Hauptachse;
Erhalten mindestens eines Fluoreszenzsignalwertvektors von Fluoreszenzsignalwerten in dem Fluoreszenzbild (FI) entlang einer Abtastlinie, die orthogonal zu der Hauptachse ist;
basierend auf Informationen der Kontur an Schnittpunkten mit der Abtastlinie, selektives Durchführen einer Identifizierung eines oder mehrerer Abschnitte der Abtastlinie, wo ein Kontrast-Rausch-Verhältnis einen vorbestimmten Pegel überschreitet, wobei die Abtastlinienabschnitte jeweils einen jeweiligen ersten Endpunkt, der einen Übergang (NT) von normalem Gewebe zu Tumorgewebe oder infiziertem Gewebe angibt, und einen jeweiligen zweiten Endpunkt, der einen Übergang (TN) von Tumorgewebe oder infiziertem Gewebe zu normalem Gewebe angibt, umfassen.

10. Inspektionsverfahren nach Anspruch 9, wobei vor dem Schritt des Erhaltens (S22) mindestens eines Fluoreszenzsignalwertvektors das Fluoreszenzbild (FI) so gedreht wird (S21), dass die Hauptachse der Kontur mit einer Koordinatenachse des Fluoreszenzbildes (FI) zusammenfällt, und wobei die Abtastlinie entlang einer anderen Koordinatenachse des Fluoreszenzbildes (FI) gerichtet ist.

11. Inspektionsverfahren nach Anspruch 1, ferner umfassend die folgenden Schritte:
Erhalten mindestens einer Sequenz von jeweiligen logarithmischen Fluoreszenzsignalwerten von jeweiligen nachfolgenden Pixeln, die entlang einer Abtasttrajektorie innerhalb des Fluoreszenzbildes angeordnet sind, wobei die Abtasttrajektorie an einer Position beginnt, die als Teil der Referenzregion in dem Fluoreszenzbild identifiziert wird;
Berechnen eines Indikators für eine lokale Linearität des logarithmischen Fluoreszenzsignalwerts als eine Funktion der Position in der mindestens einen Sequenz;
Identifizieren einer Position in der Sequenz, wobei der Indikator angibt, dass der logarithmische Fluoreszenzsignalwert als eine Funktion der Position in der Sequenz nicht mehr linear ist, wobei die identifizierte Position eine Kandidatengrenzposition für die Grenze zwischen dem normalen Gewebe und dem Tumorgewebe oder infizierten Gewebe ist.

12. Inspektionsvorrichtung (1) zur Inspektion eines Säugetiergewebes, die konfiguriert ist zum:
Erhalten eines Fluoreszenzbildes (FI) des Säugetiergewebes (MT), das mit einem Fluoreszenzmittel lichtempfindlich gemacht und mit Anregungslicht bestrahlt wird, wobei das Fluoreszenzbild eine Anordnung von Pixeln mit jeweiligen Fluoreszenzsignalwerten umfasst, wobei die Fluoreszenzsignalwerte eine erste Anzahl von Fluoreszenzsignalwerten umfassen, die das Säugetiergewebe in dem Fluoreszenzbild darstellen;
Bestimmen (S6) eines Referenzwerts (IR) derart, dass eine zweite Anzahl (N2) von Fluoreszenzsignalwerten, die in der ersten Anzahl von Fluoreszenzsignalwerten enthalten ist, kleiner als oder gleich dem Referenzwert ist und der Rest der ersten Anzahl von Fluoreszenzsignalwerten den Referenzwert überschreitet, wobei die zweite Anzahl ein vorbestimmter Bruchteil der ersten Anzahl ist;
Bestimmen eines durchschnittlichen Fluoreszenzsignalwerts (µ_{R}) und einer Standardabweichung (σ_{R}) der Fluoreszenzsignalwerte, die in der zweiten Anzahl von Fluoreszenzpixelwerten enthalten sind;
Durchführen einer Bildsegmentierung, um in dem Fluoreszenzbild (FI) eine Zielregion (TR), um einen Abschnitt in dem Säugetiergewebe (MT) zu bezeichnen, der als Tumorgewebe oder infiziertes Gewebe identifiziert wird, und eine Referenzregion (RR), um einen verbleibenden Abschnitt in dem Säugetiergewebe (MT) zu bezeichnen, zu unterscheiden, wobei die Vorrichtung konfiguriert ist, um pro Pixel (p) zu bestimmen, dass es Teil der Zielregion (TR) ist, wenn ein Kontrast-Rausch-Verhältnis CNR (p) für das Pixel einen vorbestimmten Schwellenwert (T_{CNR}) überschreitet, und andernfalls zu bestimmen, dass das Pixel Teil der Referenzregion (RR) ist, wobei das Kontrast-Rausch-Verhältnis CNR (p) eines Pixels definiert ist als $CNR \left(p\right) = \frac{FI \left(p\right) - {μ}_{R}}{c ⋅ {σ}_{R}} ,$
wobei FI(p) der Fluoreszenzsignalwert des Pixels (p) ist und c eine vorbestimmte Konstante ist;
Identifizieren einer Kontur der Zielregion (TR).

13. Inspektionsvorrichtung (1) zur Inspektion eines Säugetiergewebes nach Anspruch 12, und ferner konfiguriert, um das Verfahren nach einem der Ansprüche 2 bis 11 durchzuführen.

14. Inspektionsvorrichtung nach einem der Ansprüche 12 oder 13, wobei die mindestens eine Kontur die primäre Kontur (C) umfasst, die eine Grenze der Zielfläche mit der Referenzfläche angibt, und die mindestens eine Kontur eine sekundäre Kontur (C') umfasst, die sich in einem Abstand außerhalb einer Grenze der Zielfläche mit der Referenzfläche erstreckt.

15. Medizinische Behandlungsvorrichtung (100), umfassend eine Inspektionsvorrichtung nach einem der Ansprüche 12 bis 14, ferner umfassend eine Quelle (7) von Anregungslicht zum Bestrahlen des Säugetiergewebes und eine Behandlungsausrüstung (5) zum Durchführen einer medizinischen Behandlung, um den Tumor gemäß der konstruierten Kontur zu exzidieren oder zu bestrahlen oder um eine therapeutische Substanz in dem durch die konstruierte Kontur spezifizierten Bereich zu aktivieren.

## Revendications

1. Procédé d'inspection pour inspecter une image fluorescente capturée d'un tissu de mammifère qui a été rendu photosensible avec un agent fluorescent et irradié avec une lumière d'excitation, l'image fluorescente (FI) comprenant un réseau de pixels ayant des valeurs de signal fluorescent respectives, les valeurs de signal fluorescent comprenant un premier nombre (N1) de valeurs de signal fluorescent représentant le tissu de mammifère dans l'image fluorescente; le procédé comprenant:
la détermination (S6) d'une valeur de référence (IR) de sorte qu'un second nombre (N2) de valeurs de signal fluorescent comprises dans le premier nombre de valeurs de signal fluorescent est inférieur ou égal à la valeur de référence et le reste du premier nombre de valeurs de signal fluorescent dépasse la valeur de référence, lequel second nombre est une fraction prédéterminée du premier nombre;
la détermination (S7) d'une valeur de signal fluorescent moyenne (µ_{R}) et d'un écart-type (σ_{R}) de ces valeurs de signal fluorescent comprises dans le second nombre de valeurs de signal fluorescent;
la réalisation (S8) d'une segmentation d'image pour distinguer dans l'image fluorescente (FI) une région cible (TR) pour désigner une partie dans le tissu de mammifère (MT) qui est identifiée comme étant un tissu tumoral ou un tissu infecté et une région de référence (RR) pour désigner une partie restante dans le tissu de mammifère (MT), comprenant la détermination par pixel (p) qu'il fait partie de la région cible (TR) si un rapport contraste sur bruit CNR (p) pour ledit pixel dépasse une valeur de seuil prédéterminée (T_{CNR}) et la détermination que le pixel fait partie de la région de référence (RR) dans le cas contraire, dans lequel le rapport contraste sur bruit CNR (p) d'un pixel est défini comme $CNR \left(p\right) = \frac{FI \left(p\right) - {μ}_{R}}{c ⋅ {σ}_{R}} ,$
dans lequel FI(p) est la valeur de signal fluorescent du pixel (p) et c est une constante prédéterminée;
l'identification (S9) d'au moins un contour C de la région cible TR.

2. Procédé d'inspection selon la revendication 1, dans lequel la valeur de seuil prédéterminée est 1 et la constante prédéterminée est 2.

3. Procédé d'inspection selon la revendication 1 ou 2, dans lequel l'image fluorescente (FI) est en outre capturée (S4) d'un arrière-plan, et dans lequel le procédé comprend en outre:
la réalisation (S5) d'une segmentation d'image préliminaire pour distinguer dans l'image fluorescente (FI) une région d'avant-plan (FR) représentant le tissu de mammifère (MT) et une région d'arrière-plan (BR) représentant l'arrière-plan, comprenant la détermination par pixel qu'il fait partie de la région d'avant-plan (FR) si la valeur de signal fluorescent (FSV) dépasse de manière significative une valeur de signal fluorescent moyenne déterminée pour l'arrière-plan en tenant compte d'un écart-type de valeurs de signal fluorescent (FSV) dans l'arrière-plan et la détermination que le pixel fait partie de la région d'arrière-plan (BR) dans le cas contraire.

4. Procédé d'inspection selon la revendication 3, dans lequel la valeur de signal fluorescent moyenne et l'écart-type de valeurs de signal fluorescent sont déterminés (S2A) à partir d'une partie (BP) de l'image fluorescente (FI) qui est désignée comme représentant l'arrière-plan.

5. Procédé d'inspection selon l'une des revendications précédentes, dans lequel l'image fluorescente du tissu de mammifère est capturée in vivo.

6. Procédé d'inspection selon l'une des revendications précédentes, dans lequel la valeur de référence est la valeur pour un k-ième q-quantile prédéterminé de l'histogramme des valeurs de signal de fluorescence et le k-ième q-quantile prédéterminé est défini conformément à un rapport de surface de tissu tumoral attendu rₑ d'une surface de tissu tumoral sur la surface totale du tissu dans l'image fluorescente (FI).

7. Procédé d'inspection selon l'une quelconque des revendications précédentes, comprenant en outre une évaluation basée sur une trajectoire de balayage qui inclut:
l'obtention (S10) d'au moins un vecteur de valeur de signal fluorescent de valeurs de signal fluorescent dans l'image fluorescente (FI) le long d'une trajectoire de balayage;
pour chaque valeur de seuil d'une pluralité de valeurs de seuil, la détermination (S11) d'un ensemble respectif de sections de trajectoire de balayage candidates dans lesquelles la valeur de signal fluorescent dépasse la valeur de seuil et la détermination de propriétés statistiques de sections de la trajectoire de balayage qui ne sont pas des sections de trajectoire de balayage candidates;
la détermination (S13) de la valeur de seuil de la pluralité de valeurs de seuil pour laquelle l'ensemble respectif de sections de trajectoire de balayage candidates correspond le mieux à la segmentation d'image de l'image fluorescente (FI) le long de la trajectoire de balayage selon une segmentation basée sur un rapport contraste sur bruit en utilisant les propriétés statistiques déterminées.

8. Procédé d'inspection selon la revendication 7, dans lequel la procédure décrite dans celle-ci est répétée (S14) pour une pluralité de trajectoires de balayage mutuellement différentes d'un ensemble de trajectoires de balayage et en particulier la procédure décrite dans celle-ci est répétée (S15) pour une pluralité d'ensembles de trajectoires de balayage.

9. Procédé d'inspection selon l'une quelconque des revendications précédentes 1 à 8, comprenant en outre
pour au moins un contour, la détermination d'au moins un axe principal;
l'obtention d'au moins un vecteur de valeur de signal fluorescent de valeurs de signal fluorescent dans l'image fluorescente (FI) le long d'une ligne de balayage qui est orthogonale à l'axe principal;
sur la base d'informations du contour à des points d'intersection avec la ligne de balayage, la réalisation sélective d'une identification d'une ou plusieurs sections de la ligne de balayage où un rapport contraste sur bruit dépasse un niveau prédéterminé, lesdites sections de ligne de balayage comprenant chacune un premier point d'extrémité respectif indicatif d'une transition (NT) d'un tissu normal à un tissu tumoral ou un tissu infecté et un second point d'extrémité respectif indicatif d'une transition (TN) d'un tissu tumoral ou d'un tissu infecté à un tissu normal.

10. Procédé d'inspection selon la revendication 9, dans lequel avant l'étape d'obtention (S22) d'au moins un vecteur de valeur de signal fluorescent, l'image fluorescente (FI) est tournée (S21) de sorte que l'axe principal du contour coïncide avec un axe de coordonnées de l'image fluorescente (FI) et dans lequel la ligne de balayage est dirigée le long d'un autre axe de coordonnées de l'image fluorescente (FI).

11. Procédé d'inspection selon la revendication 1, comprenant en outre les étapes de:
obtention d'au moins une séquence de valeurs de signal de fluorescence logarithmiques respectives de pixels subséquents respectifs qui sont agencés le long d'une trajectoire de balayage dans l'image fluorescente, dans lequel la trajectoire de balayage commence à une position identifiée comme faisant partie de la région de référence dans l'image fluorescente;
calcul d'un indicateur pour une linéarité locale de la valeur de signal de fluorescence logarithmique en fonction de la position dans l'au moins une séquence;
identification d'une position dans la séquence dans laquelle l'indicateur indique que la valeur de signal de fluorescence logarithmique en fonction de la position dans la séquence n'est plus linéaire, la position identifiée étant une position de frontière candidate pour la frontière entre le tissu normal et le tissu tumoral ou le tissu infecté.

12. Dispositif d'inspection (1) pour l'inspection d'un tissu de mammifère configuré pour:
obtenir une image fluorescente (FI) du tissu de mammifère (MT) rendu photosensible avec un agent fluorescent et irradié avec une lumière d'excitation, l'image fluorescente comprenant un réseau de pixels ayant des valeurs de signal fluorescent respectives, les valeurs de signal fluorescent comprenant un premier nombre de valeurs de signal fluorescent représentant le tissu de mammifère dans l'image fluorescente;
déterminer (S6) une valeur de référence (IR) de sorte qu'un second nombre (N2) de valeurs de signal fluorescent comprises dans le premier nombre de valeurs de signal fluorescent est inférieur ou égal à la valeur de référence et le reste du premier nombre de valeurs de signal fluorescent dépasse la valeur de référence, lequel second nombre est une fraction prédéterminée du premier nombre;
déterminer une valeur de signal fluorescent moyenne (µ_{R}) et un écart-type (σ_{R}) des valeurs de signal fluorescent comprises dans le second nombre de valeurs de pixel fluorescent;
réaliser une segmentation d'image pour distinguer dans l'image fluorescente (FI) une région cible (TR) pour désigner une partie dans le tissu de mammifère (MT) qui est identifiée comme étant un tissu tumoral ou un tissu infecté et une région de référence (RR) pour désigner une partie restante dans le tissu de mammifère (MT), dans lequel le dispositif est configuré pour déterminer par pixel (p) qu'il fait partie de la région cible (TR) si un rapport contraste sur bruit CNR (p) pour ledit pixel dépasse une valeur de seuil prédéterminée (T_{CNR}) et pour déterminer que le pixel fait partie de la région de référence (RR) dans le cas contraire, dans lequel le rapport contraste sur bruit CNR (p) d'un pixel est défini comme $CNR \left(p\right) = \frac{FI \left(p\right) - {μ}_{R}}{c ⋅ {σ}_{R}} ,$
dans lequel FI(p) est la valeur de signal fluorescent du pixel (p) et c est une constante prédéterminée;
identifier un contour de la région cible (TR).

13. Dispositif d'inspection (1) pour l'inspection d'un tissu de mammifère selon la revendication 12, et configuré en outre pour réaliser le procédé selon l'une quelconque des revendications 2 à 11.

14. Dispositif d'inspection selon l'une quelconque des revendications 12 ou 13, dans lequel l'au moins un contour comprend le contour principal (C) qui indique une frontière de la surface cible avec la surface de référence et l'au moins un contour comprend un contour secondaire (C') qui s'étend à une distance à l'extérieur d'une frontière de la surface cible avec la surface de référence.

15. Dispositif de traitement médical (100) comprenant un dispositif d'inspection selon l'une quelconque des revendications 12 à 14, comprenant en outre une source (7) de lumière d'excitation pour irradier le tissu de mammifère et un équipement de traitement (5) pour réaliser un traitement médical pour exciser ou irradier la tumeur conformément au contour construit ou pour activer une substance thérapeutique dans la plage spécifiée par le contour construit.
